# EUROPEAN PATENT APPLICATION

(11) **EP 4 482 115 A1**
(43) Date of publication of application: **25.12.2024**
(21) Application number: 23755804.4
(22) Date of filing: 15.02.2023
(51) Int. Cl.: H04L 47/56

(54) **DATA SCHEDULING METHOD, APPARATUS, DEVICE, AND STORAGE MEDIUM**

(30) Priority: 15.02.2022 CN 202210139235
(71) Applicant: Datang Mobile Communications Equipment Co., Ltd., Beijing 100085 (CN)
(72) Inventor: CHENG, Zhimi, Beijing 100085 (CN)
(74) Representative: Studio Torta S.p.A.
(86) International application number: PCT/CN2023/076165
(87) International publication number: WO 2023/155802

(57) **Abstract**

According to a data scheduling method, an apparatus, a device and a storage medium provided by the present disclosure, a network control function network element acquires message processing logic of data flow, and configures the message processing logic for a target forwarding device, for the target forwarding device to forward corresponding data flow based on the message processing logic. Since the message processing logic is obtained based on a queue configuration rule of a forwarding port of the forwarding device, and the queue configuration rule is determined based on a data forwarding period of the forwarding device and the number of queues of message queues supported by the forwarding port of the forwarding device, thus when data flow is forwarded, each data flow is forwarded in a specific queue and in accordance with a specific forwarding time, making it possible to accurately determine a latency in a data transmission process, thus realizing control of an end-to-end latency in a deterministic network.

## Description

This disclosure claims priority to Chinese Patent Application No. 202210139235.3, filed to the China National Intellectual Property Administration on February 15, 2022 and entitled "DATA SCHEDULING METHOD, APPARATUS, DEVICE AND STORAGE MEDIUM", which is hereby incorporated by reference in its entirety.

### TECHNICAL FIELD

The present disclosure relates to the technical field of communication technologies, and in particular to a data scheduling method, an apparatus, a device and a storage medium.

### BACKGROUND

Deterministic Networking (Deterministic Networking, DetNet) can implement the determination of paths for data transmission over Layer 2 bridged and Layer 3 routed segments. According to the paths, worst-case bounds on latency, packet loss, and jitter can be determined, so as to control and reduce the end-to-end latency.

In the related art, there are multiple paths between a sending end and a receiving end. The sending end will periodically measure the packet loss, latency and jitter of each path, and select a corresponding transmission path for the data flow according to algorithms such as the shortest latency, the smallest packet loss or the smallest jitter, and the transmission path includes at least one forwarding device.

Accordingly, when forwarding data flow, the forwarding device will insert the data flow into a corresponding queue according to a priority of the data flow, so as to minimize the latency and jitter of the high-priority data flow, while the low-priority data flow will wait in line or be discarded. However, because the queuing delay of data flow cannot be determined, it is impossible to determine the latency on the transmission path, and then it is impossible to control the latency.

### SUMMARY

The present disclosure provides a data scheduling method, an apparatus, a device, and a storage medium, which are used for ensuring determinacy of data transmission delay in a deterministic network, thereby realizing control of an end-to-end latency in the deterministic network.

In a first aspect, the present disclosure provides a data scheduling method, applied to a network control function network element, the data scheduling method including: acquiring message processing logic of data flow, where the message processing logic is obtained based on a queue configuration rule of a forwarding port of a forwarding device and the queue configuration rule is determined according to a data forwarding period of the forwarding device and a number of queues of message queues supported by the forwarding port of the forwarding device; configuring the message processing logic for a target forwarding device, where the message processing logic is used for forwarding of the corresponding data stream.

Optionally, acquiring the message processing logic of the data flow includes: receiving a first data packet sent by the forwarding device; and obtaining the message processing logic based on the first data packet and the queue configuration rule.

Optionally, obtaining the message processing logic based on the first data packet and the queue configuration rule includes: parsing the first data packet to obtain demand information of the data flow; and obtaining the message processing logic according to the demand information and the queue configuration rule.

Optionally, obtaining the message processing logic according to the demand information and the queue configuration rule includes: sending the demand information to a policy management function network element; receiving a routing-forwarding rule obtained by the policy management function network element according to the demand information and the queue configuration rule; obtaining the message processing logic according to the routing-forwarding rule.

Optionally, obtaining the message processing logic based on the first data packet and the queue configuration rule includes: sending the first data packet to a policy management function network element for the policy management function network element to obtain demand information of the data flow according to the first data packet; receiving a routing-forwarding rule obtained by the policy management function network element according to the demand information and the queue configuration rule; obtaining the message processing logic according to the routing-forwarding rule.

Optionally, obtaining the message processing logic according to the routing-forwarding rule includes: determining queue information of the data flow according to the routing-forwarding rule, where the queue information is indicative of a queue for sending the data flow; obtaining the message processing logic according to the queue information and the routing-forwarding rule.

Optionally, obtaining the message processing logic according to the routing-forwarding rule includes: receiving queue information obtained by the policy management function network element according to the demand information; and obtaining the message processing logic according to the routing-forwarding rule and the queue information.

Optionally, obtaining the message processing logic based on the first data packet and the queue configuration rule includes: parsing the first data packet to obtain demand information of the data flow; sending the demand information to a policy management function network element; and receiving the message processing logic obtained by the policy management function network element according to the demand information.

Optionally, obtaining the message processing logic based on the first data packet and the queue configuration rule includes: sending the first data packet to a policy management function network element; and receiving the message processing logic obtained by the policy management function network element according to the first data packet.

Optionally, before obtaining the message processing logic of the data flow, the method further includes: determining the queue configuration rule of the forwarding port according to the data forwarding period of the forwarding device and the number of queues of message queues supported by the forwarding port of the forwarding device; or, receiving the queue configuration rule sent by a policy management function network element; where the queue configuration rule is indicative of data forwarding time of each of the message queues in a forwarding period of the forwarding port, and a duration of the data forwarding time is the data forwarding period of the forwarding device.

In a second aspect, the present disclosure provides a data scheduling method, applied to a policy management function network element. The data scheduling method includes: acquiring demand information of data flow; determining a routing-forwarding rule according to the demand information and a queue configuration rule, where the queue configuration rule is determined according to a data forwarding period of a forwarding device and a number of queues of message queues supported by a forwarding port of the forwarding device; determining message processing logic of the data flow according to the routing-forwarding rule; sending the message processing logic to a network control function network element, where the message processing logic is used for forwarding of corresponding data flow.

Optionally, determining the message processing logic according to the routing-forwarding rule includes: determining, according to the demand information and the queue configuration rule, queue information used for processing the data flow; and determining the message processing logic according to the routing-forwarding rule and the queue information.

In a third aspect, the present disclosure provides a data scheduling method, applied to a policy management function network element. The data scheduling method includes: acquiring demand information of data flow; obtaining a routing-forwarding rule according to the demand information and a queue configuration rule, where the queue configuration rule is determined according to a data forwarding period of a forwarding device and a number of queues of message queues supported by a forwarding port of the forwarding device; sending the routing-forwarding rule to a network control function network element, where the routing-forwarding rule is used for determining message processing logic and the message processing logic is used for forwarding of corresponding data flow.

Optionally, sending the routing-forwarding rule to the network control function network element includes: determining queue information according to the demand information and the queue configuration rule; sending the queue information and the routing-forwarding rule to the network control function network element for the network control function network element to determine the message processing logic according to the routing-forwarding rule and the queue information.

Optionally, acquiring the demand information of the data flow includes: receiving the demand information of the data flow in a first data packet sent by the network control function network element.

Optionally, acquiring the demand information of the data flow includes: receiving a first data packet sent by the network control function network element; and parsing the first data packet to obtain the demand information of the data flow.

Optionally, before acquiring the demand information of the data flow, the method further includes: determining the queue configuration rule of the forwarding port according to the data forwarding period of the forwarding device and the number of queues of message queues supported by the forwarding port of the forwarding device; or, receiving the queue configuration rule sent by the network control function network element; where the queue configuration rule is indicative of data forwarding time of each of the message queues in a forwarding period of the forwarding port, and a duration of the data forwarding time is the data forwarding period of the forwarding device.

In a fourth aspect, an embodiment of the present disclosure provides a data scheduling method, applied to a forwarding device. The data scheduling method includes: in response to receiving data flow to be processed, determining a target queue for forwarding the data flow to be processed based on message processing logic; determining forwarding time of the data flow to be processed based on a queue configuration rule of the forwarding device, where the message processing logic is configured for the forwarding device by a network control function network element; forwarding the data flow to be processed at the forwarding time through the target queue.

Optionally, the data scheduling method further includes: sending a first data packet to the network control function network element; and receiving the message processing logic obtained by the network control function network element according to the first data packet.

In a fifth aspect, an embodiment of the present disclosure provides a data scheduling apparatus, applied to network control function network element. The data scheduling apparatus includes: an acquiring module, adapted to acquire message processing logic of data flow, where a queue configuration rule is determined according to a data forwarding period of a forwarding device and a number of queues of message queues supported by a forwarding port of the forwarding device; a configuring module, adapted to configure the message processing logic for a target forwarding device for forwarding of corresponding data flow.

Optionally, the acquiring module is specifically adapted to: receive a first data packet sent by the forwarding device; and obtain the message processing logic based on the first data packet and the queue configuration rule.

Optionally, the acquiring module is specifically adapted to: parse the first data packet to obtain demand information of the data flow; and obtain the message processing logic according to the demand information and the queue configuration rule.

Optionally, the acquiring module is specifically adapted to: send the demand information to a policy management function network element; receive a routing-forwarding rule obtained by the policy management function network element according to the demand information and the queue configuration rule; obtain the message processing logic according to the routing-forwarding rule.

Optionally, the acquiring module is specifically adapted to: send the first data packet to a policy management function network element for the policy management function network element to obtain demand information of the data flow according to the first data packet; receive a routing-forwarding rule obtained by the policy management function network element according to the demand information and the queue configuration rule; obtain the message processing logic according to the routing-forwarding rule.

Optionally, the acquiring module is specifically adapted to: determine queue information of the data flow according to the routing-forwarding rule, where the queue information is indicative of a queue for sending the data flow; obtain the message processing logic according to the queue information and the routing-forwarding rule.

Optionally, the acquiring module is specifically adapted to: receive queue information obtained by the policy management function network element according to the demand information; and obtain the message processing logic according to the routing-forwarding rule and the queue information.

Optionally, the acquiring module is specifically adapted to: parse the first data packet to obtain demand information of the data flow; send the demand information to a policy management function network element; and receive the message processing logic obtained by the policy management function network element according to the demand information.

Optionally, the acquiring module is specifically adapted to: send the first data packet to a policy management function network element; and receive the message processing logic obtained by the policy management function network element according to the first data packet.

Optionally, the data scheduling apparatus further includes: a determining module, adapted to determine the queue configuration rule of the forwarding port according to the data forwarding period of the forwarding device and the number of queues of message queues supported by the forwarding port of the forwarding device; or, a receiving module, adapted to receive the queue configuration rule sent by a policy management function network element; where the queue configuration rule is indicative of data forwarding time of each of the message queues in a forwarding period of the forwarding port, and a duration of the data forwarding time is the data forwarding period of the forwarding device.

In a sixth aspect, an embodiment of the present disclosure provides a data scheduling apparatus, applied to a policy management function network element. The data scheduling apparatus includes:
an acquiring module, adapted to acquire demand information of data flow; a determining module, adapted to determine a routing-forwarding rule according to the demand information and a queue configuration rule and determine message processing logic of the data flow according to the routing-forwarding rule, where the queue configuration rule is determined according to a data forwarding period of a forwarding device and a number of queues of message queues supported by a forwarding port of the forwarding device; a sending module, adapted to send the message processing logic to a network control function network element, where the message processing logic is used for forwarding of corresponding data flow.

Optionally, the determining module is specifically adapted to: determine, according to the demand information and the queue configuration rule, queue information used for processing the data flow; and determine the message processing logic according to the routing-forwarding rule and the queue information.

In a seventh aspect, an embodiment of the present disclosure provides a data scheduling apparatus, applied to a policy management function network element. The data scheduling apparatus includes: an acquiring module, adapted to acquire demand information of data flow and obtain a routing-forwarding rule according to the demand information and a queue configuration rule, where the queue configuration rule is determined according to a data forwarding period of a forwarding device and the number of queues of message queues supported by a forwarding port of the forwarding device; a sending module, adapted to send the routing-forwarding rule to a network control function network element, where the routing-forwarding rule is used for determining message processing logic and the message processing logic is used for forwarding of corresponding data flow.

Optionally, the sending module is specifically adapted to: determine queue information according to the demand information and the queue configuration rule; send the queue information and the routing-forwarding rule to the network control function network element for the network control function network element to determine the message processing logic according to the routing-forwarding rule and the queue information.

Optionally, the acquiring module is specifically adapted to: receive the demand information of the data flow in a first data packet sent by the network control function network element.

Optionally, the acquiring module is specifically adapted to: receive a first data packet sent by the network control function network element; and parse the first data packet to obtain the demand information of the data flow.

Optionally, the data scheduling apparatus further includes: a determining module, adapted to determine the queue configuration rule of the forwarding port according to the data forwarding period of the forwarding device and the number of queues of message queues supported by the forwarding port of the forwarding device; or, receive the queue configuration rule sent by the network control function network element; where the queue configuration rule is indicative of data forwarding time of each of the message queues in a forwarding period of the forwarding port, and a duration of the data forwarding time is the data forwarding period of the forwarding device.

In an eight aspect, an embodiment of the present disclosure provides a data scheduling apparatus, applied to a forwarding device. The data scheduling apparatus includes: a determining module, adapted to, in response to receiving data flow to be processed, determine a target queue for forwarding the data flow to be processed based on message processing logic and determine forwarding time of the data flow to be processed based on a queue configuration rule of the forwarding device, where the message processing logic is configured for the forwarding device by a network control function network element; a forwarding module, adapted to forward the data flow to be processed at the forwarding time through the target queue.

Optionally, the data scheduling apparatus further includes: a sending module, adapted to send a first data packet to the network control function network element; a receiving module, adapted to receive the message processing logic obtained by the network control function network element according to the first data packet.

In a ninth aspect, an embodiment of the present disclosure provides a network control function network element, including: a memory, adapted to store a computer program; a transceiver, adapted to transmit and receive data under control of a processor; and the processor, adapted to read the computer program in the memory and perform the following operations:
acquiring message processing logic of data flow, where the message processing logic is obtained based on a queue configuration rule of a forwarding port of a forwarding device and the queue configuration rule is determined according to a data forwarding period of the forwarding device and a number of queues of message queues supported by the forwarding port of the forwarding device; configuring the message processing logic for a target forwarding device for forwarding of corresponding data flow.

Optionally, acquiring the message processing logic of the data flow includes: receiving a first data packet sent by the forwarding device; and obtaining the message processing logic based on the first data packet and the queue configuration rule.

Optionally, obtaining the message processing logic based on the first data packet and the queue configuration rule includes: parsing the first data packet to obtain demand information of the data flow; and obtaining the message processing logic according to the demand information and the queue configuration rule.

Optionally, obtaining the message processing logic according to the demand information and the queue configuration rule includes: sending the demand information to a policy management function network element; receiving a routing-forwarding rule obtained by the policy management function network element according to the demand information and the queue configuration rule; obtaining the message processing logic according to the routing-forwarding rule.

Optionally, obtaining the message processing logic based on the first data packet and the queue configuration rule includes: sending the first data packet to a policy management function network element for the policy management function network element to obtain demand information of the data flow according to the first data packet; receiving a routing-forwarding rule obtained by the policy management function network element according to the demand information and the queue configuration rule; obtaining the message processing logic according to the routing-forwarding rule.

Optionally, obtaining the message processing logic according to the routing-forwarding rule includes: determining queue information of the data flow according to the routing-forwarding rule, where the queue information is indicative of a queue for sending the data flow; obtaining the message processing logic according to the queue information and the routing-forwarding rule.

Optionally, obtaining the message processing logic according to the routing-forwarding rule includes: receiving queue information obtained by the policy management function network element according to the demand information; and obtaining the message processing logic according to the routing-forwarding rule and the queue information.

Optionally, obtaining the message processing logic based on the first data packet and the queue configuration rule includes: parsing the first data packet to obtain demand information of the data flow; sending the demand information to a policy management function network element; receiving the message processing logic obtained by the policy management function network element according to the demand information.

Optionally, obtaining the message processing logic based on the first data packet and the queue configuration rule includes: sending the first data packet to a policy management function network element; and receiving the message processing logic obtained by the policy management function network element according to the first data packet.

Optionally, before obtaining the message processing logic of the data flow, the processor is further adapted to: determine the queue configuration rule of the forwarding port according to the data forwarding period of the forwarding device and the number of queues of message queues supported by the forwarding port of the forwarding device; or, receive the queue configuration rule sent by a policy management function network element; where the queue configuration rule is indicative of data forwarding time of each of the message queues in a forwarding period of the forwarding port, and a duration of the data forwarding time is the data forwarding period of the forwarding device.

In a tenth aspect, an embodiment of the present disclosure provides a policy management function network element, including: a memory, adapted to store a computer program; a transceiver, adapted to transmit and receive data under control of a processor; and the processor, adapted to read the computer program in the memory and perform the following operations:
acquiring demand information of data flow; determining a routing-forwarding rule according to the demand information and a queue configuration rule, where the queue configuration rule is determined according to a data forwarding period of a forwarding device and a number of queues of message queues supported by a forwarding port of the forwarding device; determining message processing logic of the data flow according to the routing-forwarding rule; sending the message processing logic to a network control function network element, where the message processing logic is used for forwarding of corresponding data flow.

Optionally, determining the message processing logic according to the routing-forwarding rule includes: determining, according to the demand information and the queue configuration rule, queue information used for processing the data flow; determining the message processing logic according to the routing-forwarding rule and the queue information.

In an eleventh aspect, an embodiment of the present disclosure provides a policy management function network element, including: a memory, adapted to store a computer program; a transceiver, adapted to transmit and receive data under control of a processor; and the processor, adapted to read the computer program in the memory and perform the following operations:
acquiring demand information of data flow; obtaining a routing-forwarding rule according to the demand information and a queue configuration rule, where the queue configuration rule is determined according to a data forwarding period of a forwarding device and a number of queues of message queues supported by a forwarding port of the forwarding device; sending the routing-forwarding rule to a network control function network element, where the routing-forwarding rule is used for determining message processing logic and the message processing logic is used for forwarding of corresponding data flow.

Optionally, sending the routing-forwarding rule to the network control function network element includes: determining queue information according to the demand information and the queue configuration rule; sending the queue information and the routing-forwarding rule to the network control function network element for the network control function network element to determine the message processing logic according to the routing-forwarding rule and the queue information.

Optionally, acquiring the demand information of the data flow includes: receiving the demand information of the data flow in a first data packet sent by the network control function network element.

Optionally, acquiring the demand information of the data flow includes: receiving a first data packet sent by the network control function network element; and parsing the first data packet to obtain the demand information of the data flow.

Optionally, before acquiring the demand information of the data flow, the processor is further adapted to: determine the queue configuration rule of the forwarding port according to the data forwarding period of the forwarding device and the number of queues of message queues supported by the forwarding port of the forwarding device; or, receive the queue configuration rule sent by the network control function network element; where the queue configuration rule is indicative of data forwarding time of each of the message queues in a forwarding period of the forwarding port, and a duration of the data forwarding time is the data forwarding period of the forwarding device.

In a twelfth aspect, an embodiment of the present disclosure provides a forwarding device, including: a memory, adapted to store a computer program; a transceiver, adapted to transmit and receive data under control of a processor; and the processor, adapted to read the computer program in the memory and perform the following operations:
in response to receiving data flow to be processed, determining a target queue for forwarding the data flow to be processed based on message processing logic; determining forwarding time of the data flow to be processed based on a queue configuration rule of the forwarding device, where the message processing logic is configured for the forwarding device by a network control function network element; and forwarding the data flow to be processed at the forwarding time through the target queue.

Optionally, the processor is further adapted to: send a first data packet to the network control function network element; and receive the message processing logic obtained by the network control function network element according to the first data packet.

In a thirteenth aspect, an embodiment of the present disclosure provides a processor-readable storage medium, where the processor-readable storage medium stores a computer program, and the computer program is used to cause a processor to execute the data scheduling method according to any one of the first aspect, the second aspect, the third aspect, and the fourth aspect.

In a fourteenth aspect, an embodiment of the present disclosure provides a computer program product including a computer program, where when the computer program is executed by a processor, the data scheduling method according to any one of the first aspect, the second aspect, the third aspect, and the fourth aspect is implemented.

According to the data scheduling method, apparatus, device and storage medium provided by the present disclosure, a network control function network element acquires message processing logic of data flow, and configures the message processing logic for a target forwarding device, for the target forwarding device to forward corresponding data flow based on the message processing logic. Since the message processing logic is obtained based on a queue configuration rule of a forwarding port of the forwarding device, and the queue configuration rule is determined based on a data forwarding period of the forwarding device and the number of queues of message queues supported by the forwarding port of the forwarding device, thus when data flow is forwarded, each data flow is forwarded in a specific queue and in accordance with a specific forwarding time, making it possible to accurately determine a latency in a data transmission process, thus realizing control of an end-to-end latency in a deterministic network.

It should be understood that what is described in the above Summary section is not intended to limit key or important features of the embodiments of the present disclosure, nor is it intended to limit the scope of the present disclosure. Other features of the present disclosure will be readily understood by the following description.

### BRIEF DESCRIPTION OF DRAWINGS

In order to explain the technical solutions in the present disclosure or in the prior art more clearly, the drawings that need to be used in the description of the embodiments or the prior art will be briefly introduced in the following. Obviously, the drawings in the following description are some embodiments of the present disclosure, and for those of ordinary skills in the art, other drawings can be obtained according to these drawings without paying creative effort.
FIG. 1 is schematic diagram of an application scenario provided by an embodiment of the present disclosure.
FIG. 2 is flowchart of a data scheduling method provided by an embodiment of the present disclosure.
FIG. 3 is a flowchart 1 of a configuration mode for message processing logic provided by an embodiment of the present disclosure.
FIG. 4 is a flowchart 2 of a configuration mode for message processing logic provided by an embodiment of the present disclosure.
FIG. 5 is a flowchart 3 of a configuration mode for message processing logic provided by an embodiment of the present disclosure.
FIG. 6 is a flowchart 4 of a configuration mode for message processing logic provided by an embodiment of the present disclosure.
FIG. 7 is a flowchart 5 of a configuration mode for message processing logic provided by an embodiment of the present disclosure.
FIG. 8 is a flowchart 6 of a configuration mode for message processing logic provided by an embodiment of the present disclosure.
FIG. 9 is a flowchart 7 of a configuration mode for message processing logic provided by an embodiment of the present disclosure.
FIG. 10 is a flowchart 8 of a configuration mode for message processing logic provided by an embodiment of the present disclosure.
FIG. 11 is a flowchart 9 of a configuration mode for message processing logic provided by an embodiment of the present disclosure.
FIG. 12 is a structural diagram 1 of a data scheduling apparatus provided by an embodiment of the present disclosure.
FIG. 13 is a structural diagram 2 of a data scheduling apparatus provided by an embodiment of the present disclosure.
FIG. 14 is a structural diagram 3 of a data scheduling apparatus provided by an embodiment of the present disclosure.
FIG. 15 is a structural diagram 4 of a data scheduling apparatus provided by an embodiment of the present disclosure.
FIG. 16 is a structural diagram of a network control function network element provided by an embodiment of the present disclosure.
FIG. 17 is a structural diagram of a policy management function network element provided by an embodiment of the present disclosure.
FIG. 18 is a structural schematic diagram of a forwarding device provided by an embodiment of the present disclosure.

### DESCRIPTION OF EMBODIMENTS

In the present disclosure, the term "and/or" describes an association relationship of associated objects, indicating that there may be three kinds of relationships. For example, A and/or B can indicate three cases, i.e., A exists alone, A and B exist at the same time, and B exists alone. The character "/" generally indicates that associated objects before and after the character are of an "OR" relationship. In embodiments of the present disclosure, the term "plurality" refers to two or more, and other quantifiers are similar.

The technical solutions in the embodiments of the present disclosure will be described clearly and comprehensively with reference to the drawings in the embodiments of the present disclosure. Obviously, the described embodiments are only part of the embodiments of the present disclosure, rather than all of them. Based on the embodiments in the present disclosure, all other embodiments obtained by those of ordinary skilled in the art without paying creative effort belong to the protection scope of the present disclosure.

First of all, the definitions of terms involved in the present disclosure are explained as follows:
Application Plane (Application Plane): a plane where applications and services that define network behaviors are located.

Control Plane (Control Plane): the control plane decides how one or more network devices forward data packets, and sends these decisions in form of flow table(s) to the network devices for execution.

Management Plane (Management Plane): responsible for monitoring, configuring and maintaining a network device, for example, making decisions on a state of the network device. The management plane mainly interacts with an operational plane of the device.

Forwarding Plane (Forwarding Plane): a functional module responsible for processing data packets in the data path according to instructions received from the control plane. The operations of the forwarding plane include, but are not limited to, forwarding, dropping and changing data packets.

Operational Plane (Operational Plane): responsible for managing an operating state of a network device in which it is located, such as whether the device is active or inactive, the number of available ports, a state of each port, and so on. The operational plane is responsible for resources of the network device, such as ports, memory, etc.

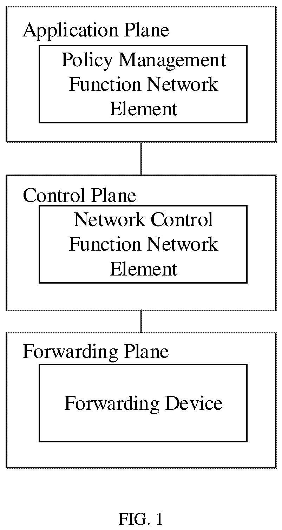

Next, an application scenario of an embodiment of the present disclosure will be described with reference to FIG. 1.

FIG. 1 is a schematic diagram of an application scenario provided by an embodiment of the present disclosure. As shown in FIG. 1, this scenario includes a network control function network element, a policy management function network element and a forwarding device.

The network control function network element is located in a control plane, the policy management function network element is located in an application plane, and the forwarding device is located in a forwarding plane.

In some embodiments, the type of the forwarding device is not specifically limited, for example, the forwarding device may be a network device with a data forwarding function such as a base station. Specifically, it may be a base station and/or a base station controller in a global system for mobile communications (Global System for Mobile communications, GSM) or code division multiple access (Code Division Multiple Access, CDMA); may also be a base station (Node B, NB) and/or a radio network controller (Radio Network Controller, RNC) in wide-band code division multiple access (Wide-band Code Division Multiple Access, WCDMA), or an evolutional network device (Evolutional NodeB, 4G base station or e-NodeB) in a long term evolution (Long Term Evolution, LTE) system, or a relay node or an access point, or a base station (5G base station) in a further 5G network, etc.

It should be noted that FIG. 1 exemplarily shows a communication scenario of a network control function network element, a policy management function network element and a forwarding device, and optionally, other devices may be included in this scenario, which is not limited in the embodiments of the present disclosure.

It should be understood that the goal of the DetNet network is to implement the determination of paths for data transmission over Layer 2 bridged and Layer 3 routed segments. The paths can provide worst-case bounds on latency, packet loss, and jitter, so as to control and reduce the end-to-end latency.

Although the current Internet Engineering Task Force (Internet Engineering Task Force, IETF) intended to use the processing method in Time-Sensitive Networking (Time-Sensitive Networking, TSN) as a processing method for DetNet data flow, the IETF has not defined how this processing technologies for L2 data frames are used by DetNet nodes. If the existing IP forwarding mechanism is adopted, although resource reservation and priority scheduling are used in conjunction, the lack of control over the behavior of each data packet results in the formation of micro-burst(s) in the queue.

In the related art, since there are usually multiple paths from end to end, when sending data, a sending end will measure each path, and periodically measure packet loss, delay, and jitter for each path, and establish a pre-estimation model for end-to-end delay and end-to-end packet loss for each path through periodic accumulation. When sending a packet at each sending end, a scheduling module performs estimation in accordance with the pre-estimation model for delay and packet loss, and selects one of the paths as a sending path of this packet in accordance with an algorithm of shortest delay/minimum packet loss/minimum jitter.

Specifically, the sending end assigns a quality of service (Quality of Service, QoS) class to each data flow. When receiving a packet, the forwarding device checks its class and inserts the packet into a corresponding queue in accordance with the class. When performing forwarding, the forwarding device will prioritize a packet with high-priority. If the priorities are consistent, the packets will be processed in the order of entry. At this time, each packet will occupy BUFFER resources in accordance with priority.

In this process, due to the limited BUFFER resources in the forwarding device, if the BUFFER has been fully occupied when a packet with high-priority arrives, the switch will select a packet with the lowest priority for dropping, and allocate the vacated BUFFER to a new incoming packet with high-priority, so as to ensure a low delay and small jitter of the packet with high-priority as far as possible.

However, this method has the following problems:
when the deterministic data flow is using a link, if there is a higher-level data flow or a same-level data flow in the traffic sharing the link and node resources of the forwarding device, the queuing delay of the packet(s) in that deterministic data flow cannot be determined, and thus the end-to-end delay cannot be determined, and likewise, the delay jitter of the packet(s) will be relatively larger.

In addition, parameters such as end-to-end delay are monitored through the network, and delay estimation is carried out when path selection is performed, so as to expect to arrive at the receiving end in accordance with an expected end-to-end delay. However, the parameters measured by the network are cumulative parameters, which represent performance of a certain period of time in the past, whereas a condition of the network always changes instantaneously, so this estimation value is inaccurate. Moreover, the lack of control over the behavior of each data packet results in the formation of micro-burst(s) in the queue, or even micro-burst iterations, which will make that the latency in the deterministic network cannot be determined, so that the latency cannot be controlled.

In view of this, embodiments of the present disclosure provide a data scheduling method, an apparatus, a device and a storage medium. A network control function network element acquires message processing logic of data flow, and configures the message processing logic for a target forwarding device, for the target forwarding device to forward corresponding data flow based on the message processing logic. Since the message processing logic is obtained based on a queue configuration rule of a forwarding port of the forwarding device, and the queue configuration rule is determined based on a data forwarding period of the forwarding device and the number of queues of message queues supported by the forwarding port of the forwarding device, thus when data flow is forwarded, each data flow is forwarded in a specific queue and in accordance with a specific forwarding time, making it possible to accurately determine a latency in a data transmission process, thus realizing control of an end-to-end latency in a deterministic network.

It should be understood that the technical solutions provided by embodiments of the present disclosure may be applicable to various systems, particularly 5G systems. For example, an applicable system may be a global system for mobile communications (global system of mobile communication, GSM), code division multiple access (code division multiple access, CDMA) system, wideband code division multiple access (Wideband Code Division Multiple Access, WCDMA) general packet radio service (general packet radio service, GPRS) system, long-term evolution (long term evolution, LTE) system, LTE frequency division duplex (frequency division duplex, FDD) system, LTE time division duplex (time division duplex, TDD) system, long term evolution advanced (long term evolution advanced, LTE-A) system, universal mobile telecommunication system (universal mobile telecommunication system, UMTS), worldwide interoperability for microwave access (worldwide interoperability for microwave access, WiMAX) system, 5G new radio (New Radio, NR) system, etc. These systems all include terminal and network devices. These systems further include a core network component, such as an evolved packet system (Evolved Packet System, EPS) and a 5G system (5GS).

It should be understood that the method and the apparatus are based on the same application concept, and since the method and the apparatus solve the problem on similar principles, the implementation of the apparatus and the method can be referred to each other, and the repetition is not repeated here.

The technical solution of embodiments of the present disclosure and how the technical solution of the present disclosure can solve the above technical problem will be explained in detail in the following specific embodiments. The following specific embodiments can be combined with each other, and the same or similar concepts or processes may not be repeated in some embodiments.

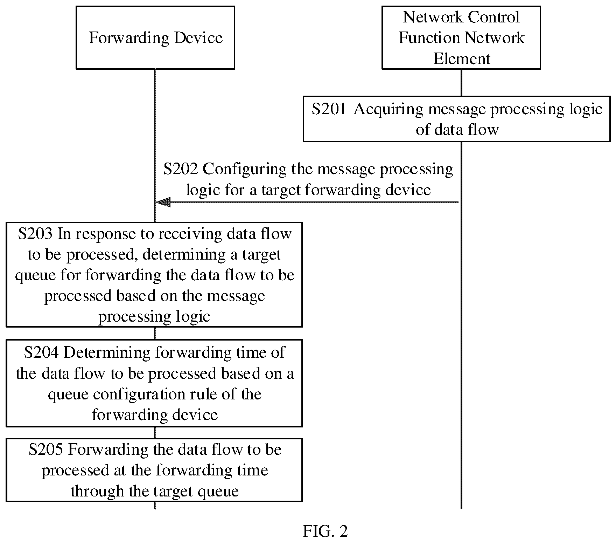

FIG. 2 is a flowchart of a data scheduling method provided by an embodiment of the present disclosure. As shown in FIG. 2, the data scheduling method provided by the embodiment of the present disclosure includes the following steps.

S201: a network control function network element acquires message processing logic of data flow.

The message processing logic is used for instructing a forwarding device to forward data flow corresponding to the data flow.

In some embodiments, the message processing logic is obtained based on a queue configuration rule of a forwarding port of a forwarding device and the queue configuration rule is determined according to a data forwarding period of the forwarding device and the number of queues of message queues supported by the forwarding port of the forwarding device. And so far the manner of acquiring the queue configuration rule, it is shown in subsequent embodiments.

The message processing logic includes: a matching domain (e.g., IP six-tuple or IP five-tuple), a priority of the data flow, and an action domain (e.g., a message queue and exit for forwarding the data flow). And so far the manner of acquiring the message processing logic, it is shown in subsequent embodiments.

S202, the network control function network element configures the message processing logic for a target forwarding device, for the target forwarding device to forward corresponding data flow based on the message processing logic.

Specifically, the network control function network element sends a configuration request to the forwarding device, where the configuration request carries the message processing logic. Correspondingly, after receiving the configuration request, the forwarding device acquires the message processing logic carried therein, and configures each forwarding port according to the message processing logic.

Optionally, after the forwarding device has configured the message processing logic, it may send a configuration response to the network control function network element, where the configuration response is used to indicate that the configuration of the message processing logic is completed.

S203, in response to receiving data flow to be processed, the forwarding device determines a target queue for forwarding the data flow to be processed based on the message processing logic.

Specifically, when the forwarding device receives the data flow to be processed, it first performs message matching according to the configured message processing logic. That is, if the IP six-tuple (or IP five-tuple) of the received data flow to be processed is consistent with a matching domain in a certain configured message processing logic, it puts the data flow to be processed into the target queue indicated in the message processing logic based on a priority and an action domain in the message processing logic, thereby using the target queue to realize forwarding of the data flow to be processed.

Accordingly, if no matching domain in the message processing logic is consistent with the data flow to be processed, the data flow to be processed is dropped, or an identification result is reported to the network control function network element.

S204, the forwarding device determines forwarding time of the data flow to be processed based on the queue configuration rule of the forwarding device.

Further, according to the queue configuration rule, the forwarding time corresponding to the target queue is determined to forward this data flow to be processed at this forwarding time.

S205, the forwarding device forwards the data flow to be processed at the forwarding time through the target queue.

It should be noted that for deterministic data flow that cannot be forwarded, it is cached, and if it is determined to forward the DetNet flow at a subsequent time, the data message is processed based on the priority and action domain in the message processing logic.

In some embodiments, when non-DetNet flow is received, it may also be processed based on the message processing logic, but the priority of the non-DetNet flow is lower than the priority of the DetNet flow on all forwarding ports. That is, the non-DetNet flow is forwarded when there is no DetNet flow in the queue where the non-DetNet flow is located. For the non-DetNet flow that cannot be forwarded, the non-DetNet flow is processed by dropping.

In the above data scheduling method provided by the present disclosure, since the message processing logic is obtained based on a queue configuration rule of a forwarding port of the forwarding device, and the queue configuration rule is determined based on a data forwarding period of the forwarding device and the number of queues of message queues supported by the forwarding port of the forwarding device, thus when data flow is forwarded, each data flow is forwarded in a specific queue and in accordance with a specific forwarding time, making it possible to accurately determine a latency in a data transmission process, thus realizing control of an end-to-end latency in a deterministic network.

In some embodiments, the above step S201 specifically includes the following steps:
(1) receiving a first data packet sent by the forwarding device;
(2) obtaining the message processing logic based on the first data packet and the queue configuration rule.

The first data packet is a leading packet received by the forwarding device after configuration of the queue configuration rule is completed, and the first data packet includes demand information of the data flow.

Understandably, by acquiring the first packet, the message can acquire the demand information of the data flow contained in the first packet, so as to configure the corresponding message processing logic for the data flow according to the demand information. When the data flow is subsequently received, the data flow can be processed according to the message processing logic.

It should be noted that when the message processing logic is obtained through the first data packet and the queue configuration rule, there are various implementations. Next, the specific solutions of various implementations are described in detail with the drawings.

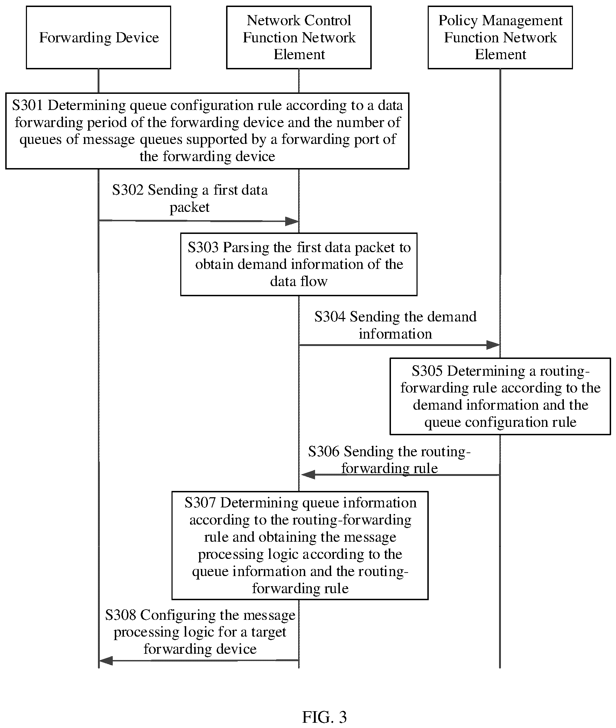

In a first implementation, FIG. 3 is a flowchart 1 of a configuration mode for message processing logic provided by an embodiment of the present disclosure. As shown in FIG. 3, the configuration mode for message processing logic provided by the embodiment of the present disclosure includes the following steps.

S301, determining the queue configuration rule according to the data forwarding period of the forwarding device and the number of queues of message queues supported by the forwarding port of the forwarding device.

It should be noted that in the embodiment of the present disclosure, there is no specific limitation on the network element device that acquires the queue configuration rule. On the one hand, the network control function network element can acquire the queue configuration rule of the forwarding device, and on the other hand, the policy management function network element can also obtain the queue configuration rule of the forwarding device.

It should be understood that any one of the network control function network element and the policy management function network element can report the queue configuration rule to another network element after acquiring the queue configuration rule.

It should be noted that the obtaining of the queue configuration rule of the forwarding device by the network control function network element in FIG. 3 is illustrated as an example, but the obtaining is not limited to this.

Optionally, after the queue configuration rule is obtained, the queue configuration rule, a forwarding period of each forwarding device and forwarding time of each message queue can be sent to a corresponding forwarding device for the forwarding device to divide the forwarding time of each message queue.

Specifically, when the policy management function network element acquires the queue configuration rule, the policy management function network element may first send the queue configuration rule to the network management function network element, and the network management function network element will send the queue configuration rule to the forwarding device for configuration.

The forwarding port of each forwarding device may include a plurality of message queues, and the queue configuration rule is indicative of a data transmission rate (e.g., a maximum transmission rate, a minimum transmission rate and an average transmission rate) of each message queue, the priority of each message queue when forwarding data flow, and corresponding forwarding time of each message queue in the forwarding period.

Specifically, in acquiring the queue configuration rule by any of the above-mentioned network elements, firstly, based on a network topology (that is, a location of the forwarding device), the number of queues of message queues supported by the forwarding port of the forwarding device and the forwarding period of the forwarding port are determined, and at the same time, the data transmission rate of each message queue of the forwarding port and the priority of each message queue when forwarding data flow are obtained.

Further, according to a duration of the forwarding period and the number of queues, the forwarding period is evenly distributed to each message queue, so as to obtain the forwarding time of each message queue in the forwarding period, where the durations of the forwarding times corresponding to respective message queues are the same.

Furthermore, the queue configuration rule is obtained based on the data transmission rate of each message queue, the priority of each message queue when forwarding data flow and the forwarding time of each message queue in the forwarding period.

S302, the forwarding device sends a first data packet to the network control function network element.

The first data packet is a leading packet received by the forwarding device after configuration of the queue configuration rule is completed, and the first data packet includes demand information of the data flow.

S303, the network control function network element parses the first data packet to obtain demand information of the data flow.

In some embodiments, the demand information of the data flow includes, but is not limited to, any one or more of the following: a DetNet flow characteristic, a DetNet flow service demand, a DetNet flow identifier, etc.

The DetNet flow identifier includes DetNet flow, a source address and a destination address, a protocol type, a port number and other information. The DetNet flow service demand includes a maximum end-to-end latency, jitter, a minimum bandwidth, a packet loss rate, a maximum number of out-of-order packets and other information. The DetNet flow characteristic includes an interval, a maximum/minimum payload size, the number of data packets in a maximum/minimum time period, etc.

S304, the network control function network element sends the demand information to the policy management function network element.

It should be noted that the manner of sending the demand information is not specifically limited in the embodiments of the present disclosure. For example, the network control function network element may send a user plane establishment request to the policy management function network element, and the user plane establishment request carries the demand information. As for other manners, the present disclosure will not repeat them one by one.

S305, the policy management function network element determines a routing-forwarding rule according to the demand information and the queue configuration rule.

The routing-forwarding rule includes: at least part of the DetNet flow identifier (used to identify the flow and generate the following matching items), a message queue of each forwarding device on the forwarding path used to forward the data flow, a next hop, a priority, a maximum rate and a minimum rate corresponding to each message queue, etc.

S306, the policy management function network element sends the routing-forwarding rule to the network control function network element.

It should be noted that the manner of sending the routing-forwarding rule is not specifically limited in the embodiments of the present disclosure. For example, the policy management function network element may send a user plane establishment request to the network control function network element, and the user plane establishment request carries the routing-forwarding rule.

S307, the network control function network element determines queue information according to the routing-forwarding rule and obtains the message processing logic according to the queue information and the routing-forwarding rule.

The queue information is indicative of the message queue of the forwarding device for sending the data flow.

Specifically, the queue information of each forwarding device is acquired from the routing-forwarding rule, so that the message processing logic is generated according to the queue information and the routing-forwarding rule.

S308, the network control function network element configures the message processing logic for a target forwarding device, for the target forwarding device to forward corresponding data flow based on the message processing logic.

It should be noted that step S308 and the manner in which the forwarding device forwards the data flow are the same as the solution in the embodiment shown in FIG. 2, and will not be repeated here.

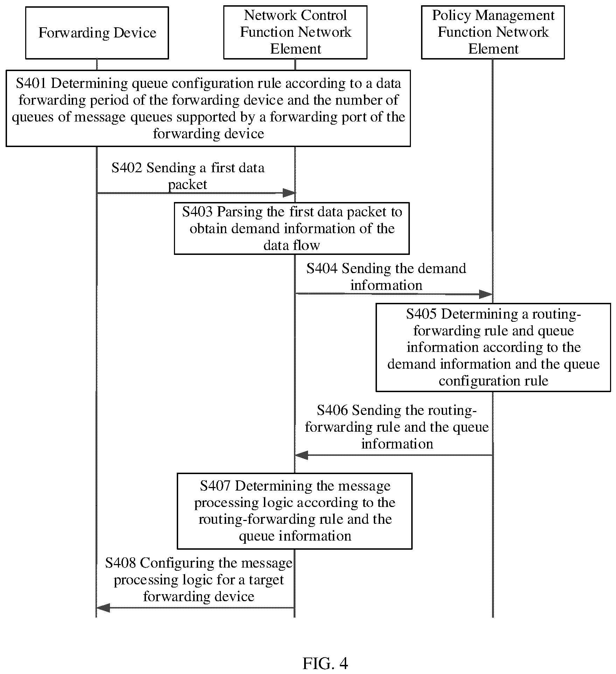

In a second implementation, FIG. 4 is a flowchart 2 of a configuration mode for message processing logic provided by an embodiment of the present disclosure. As shown in FIG. 4, the configuration mode for message processing logic provided by the embodiment of the present disclosure includes the following steps.

S401, determining the queue configuration rule according to the data forwarding period of the forwarding device and the number of queues of message queues supported by the forwarding port of the forwarding device.

S402, the forwarding device sends a first data packet to the network control function network element.

S403, the network control function network element parses the first data packet to obtain demand information of the data flow.

S404, the network control function network element sends the demand information to the policy management function network element.

It should be noted that the methods and principles of steps S401-S404 are similar to those of steps S301-S304 in the embodiment shown in FIG. 3, for their specific implementations, reference can be made to the embodiment shown in FIG. 3, which will not be repeated here.

S405, the policy management function network element determines a routing-forwarding rule and queue information according to the demand information and the queue configuration rule.

In an alternative implementation, the queue information may be determined by the policy management function network element, and the manner in which it determines the routing-forwarding rule and the manner in which it determines the queue information are similar to that performed by the network control function network element in the embodiment shown in FIG. 3, which are not repeated here.

S406, the policy management function network element sends the routing-forwarding rule and the queue information to the network control function network element.

It should be noted that the manner of sending the routing-forwarding rule and the queue information is not specifically limited in the embodiments of the present disclosure. For example, the policy management function network element may send a user plane establishment request to the network control function network element, and the user plane establishment request carries the routing-forwarding rule and the queue information. As for other manners, the present disclosure will not repeat them one by one.

S407, the network control function network element determines the message processing logic according to the routing-forwarding rule and the queue information.

S408, the network control function network element configures the message processing logic for a target forwarding device, for the target forwarding device to forward corresponding data flow based on the message processing logic.

It should be noted that the methods and principles of steps S407-S408 are similar to those of steps S307-S308 in the embodiment shown in FIG. 3, for their specific implementations, reference can be made to the embodiment shown in FIG. 3, which are not repeated here.

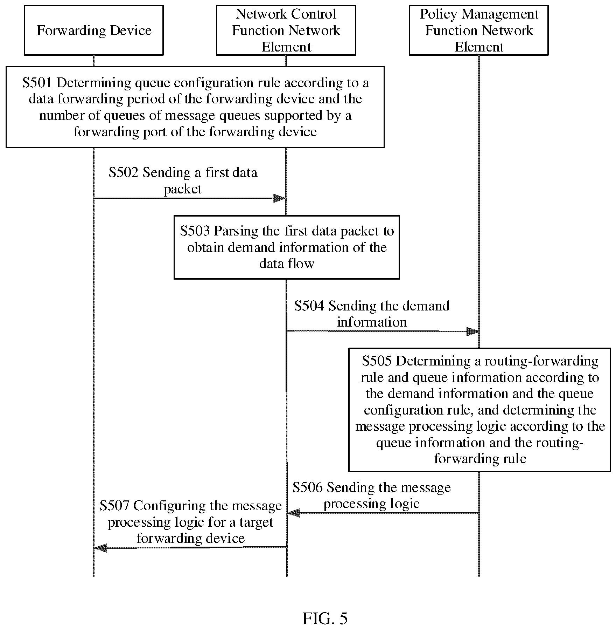

In a third implementation, the message processing logic may also be obtained by the policy management function network element. FIG. 5 is a flowchart 3 of a configuration mode for message processing logic provided by an embodiment of the present disclosure. As shown in FIG. 5, the configuration mode for message processing logic provided by the embodiment of the present disclosure includes the following steps.

S501, determining the queue configuration rule according to the data forwarding period of the forwarding device and the number of queues of message queues supported by the forwarding port of the forwarding device.

S502, the forwarding device sends a first data packet to the network control function network element.

S503, the network control function network element parses the first data packet to obtain demand information of the data flow.

S504, the network control function network element sends the demand information to the policy management function network element.

It should be noted that the methods and principles of steps S501-S504 are similar to those of steps S301-S304 in the embodiment shown in FIG. 3, for their specific implementations, reference can be made to the embodiment shown in FIG. 3, which are not repeated here.

S505, the policy management function network element determines a routing-forwarding rule and queue information according to the demand information and the queue configuration rule, and determines the message processing logic according to the queue information and the routing-forwarding rule.

It should be noted that the queue information and the message processing logic may be determined by the policy management function network element, and the manner in which it determines the routing-forwarding rule and the manner in which it determines the queue information and the message processing logic are similar to that performed by the network control function network element in the embodiment shown in FIG. 3, which are not repeated here.

S506, the policy management function network element sends the message processing logic to the network control function network element.

It should be noted that the manner of sending the message processing logic is not specifically limited in the embodiments of the present disclosure. For example, the policy management function network element may send a user plane establishment request to the network control function network element, and the user plane establishment request carries the message processing logic. As for other manners, the present disclosure will not repeat them one by one.

S507, the network control function network element configures the message processing logic for a target forwarding device, for the target forwarding device to forward corresponding data flow based on the message processing logic.

It should be noted that the methods and principles of step S507 are similar to those of step S308 in the embodiment shown in FIG. 3, for the detailed implementation, reference can be made to the embodiment shown in FIG. 3, which will not be repeated here.

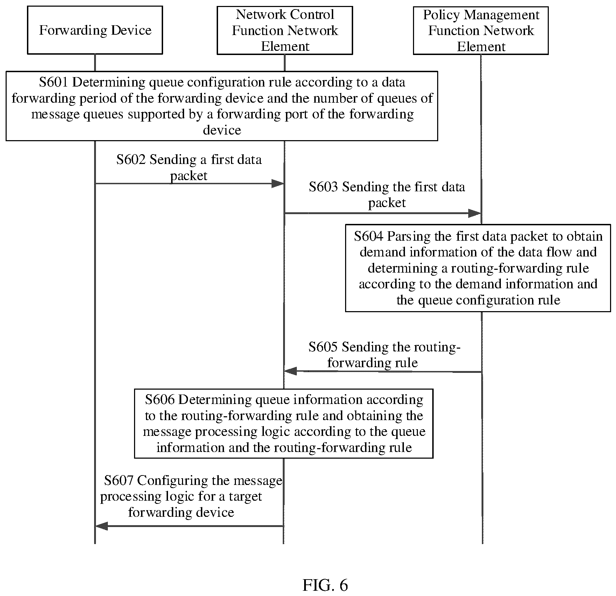

In a fourth implementation, FIG. 6 is a flowchart 4 of a configuration mode for message processing logic provided by an embodiment of the present disclosure. As shown in FIG. 6, the configuration mode for message processing logic provided by the embodiment of the present disclosure includes the following steps.

S601, determining the queue configuration rule according to the data forwarding period of the forwarding device and the number of queues of message queues supported by the forwarding port of the forwarding device.

S602, the forwarding device sends a first data packet to the network control function network element.

It should be noted that the methods and principles of steps S601-S602 are similar to those of steps S301-S302 in the embodiment shown in FIG. 3, for their specific implementations, reference can be made to the embodiment shown in FIG. 3, which are not repeated here.

S603, the network control function network element sends the first data packet to the policy management function network element.

In the embodiment of the present disclosure, the network control function does not parse the first data packet, and may send the first data packet to the policy management function network element through a user plane establishment request.

Optionally, if the queue configuration rule is acquired by the network control function network element, it is also possible to carry the queue configuration rule, the forwarding period and the forwarding time of each message queue in a user plane establishment request.

S604, the policy management function network element parses the first data packet to obtain demand information of the data flow and determines a routing-forwarding rule according to the demand information and the queue configuration rule.

It should be noted that the manner in which the policy management function network element parses the first data packet to acquire the demand information and the manner in which it obtains the routing-forwarding rule according to the demand information and the queue configuration rule are the same as the solution performed by the network control function network element in the embodiment shown in FIG. 3, which are not repeated here.

S605, the policy management function network element sends the routing-forwarding rule to the network control function network element.

S606, the network control function network element determines queue information according to the routing-forwarding rule and obtains the message processing logic according to the queue information and the routing-forwarding rule.

S606, the network control function network element configures the message processing logic for a target forwarding device, for the target forwarding device to forward corresponding data flow based on the message processing logic.

It should be noted that the methods and principles of steps S605-S606 are similar to those of steps S306-S308 in the embodiment shown in FIG. 3, for their specific implementations, reference can be made to the embodiment shown in FIG. 3, which are not repeated here.

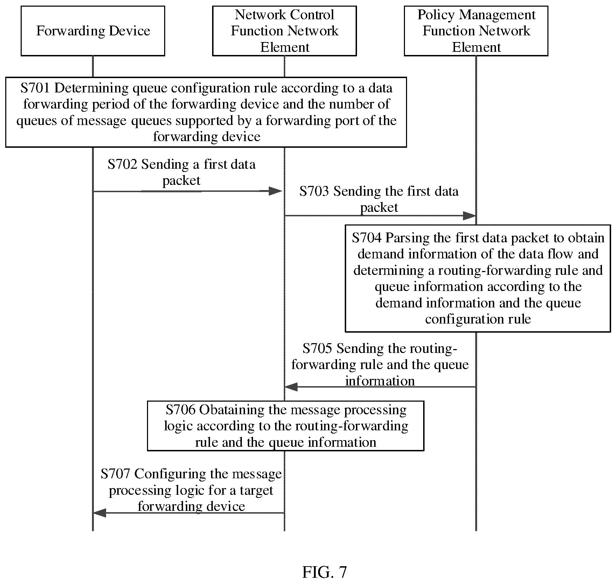

In a fifth implementation, FIG. 7 is a flowchart 5 of a configuration mode for message processing logic provided by an embodiment of the present disclosure. As shown in FIG. 7, the configuration mode for message processing logic provided by the embodiment of the present disclosure includes the following steps.

S701, determining the queue configuration rule according to the data forwarding period of the forwarding device and the number of queues of message queues supported by the forwarding port of the forwarding device.

S702, the forwarding device sends a first data packet to the network control function network element.

S703, the network control function network element sends the first data packet to the policy management function network element.

S704, the policy management function network element parses the first data packet to obtain demand information of the data flow and determines a routing-forwarding rule and queue information according to the demand information and the queue configuration rule.

S705, the policy management function network element sends the routing-forwarding rule and the queue information to the network control function network element.

S706, the network control function network element obtains the message processing logic according to the routing-forwarding rule and the queue information.

S707, the network control function network element configures the message processing logic for a target forwarding device, for the target forwarding device to forward corresponding data flow based on the message processing logic.

It should be noted that the methods and principles of steps S701-S702 are similar to those of steps S301-S302 in the embodiment shown in FIG. 3, and the methods and principles of steps S703-S705 are similar to those of steps S405-S406 in the embodiment shown in FIG. 4, and the methods and principles of steps S706-S707 are similar to those of steps S407-S408 in the embodiment shown in FIG. 4. For the specific implementation, reference can be made to the above embodiments, which is not repeated here.

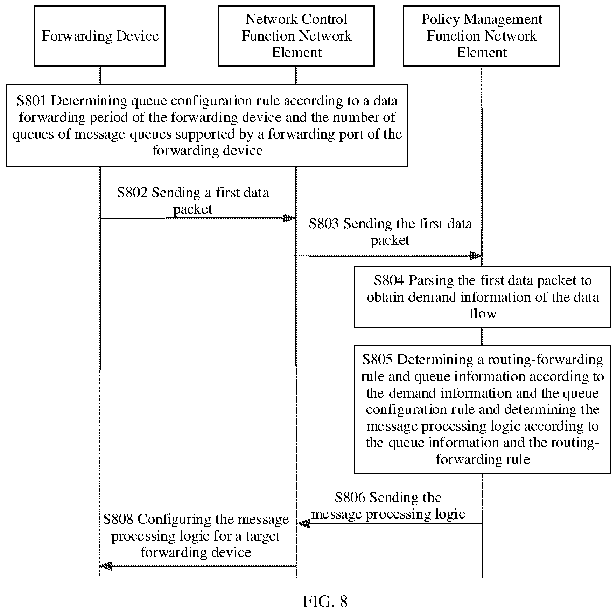

In a sixth implementation, FIG. 8 is a flowchart 6 of a configuration mode for message processing logic provided by an embodiment of the present disclosure. As shown in FIG. 8, the configuration mode for message processing logic provided by the embodiment of the present disclosure includes the following steps.

S801, determining the queue configuration rule according to the data forwarding period of the forwarding device and the number of queues of message queues supported by the forwarding port of the forwarding device.

S802, the forwarding device sends a first data packet to the network control function network element.

S803, the network control function network element sends the first data packet to the policy management function network element.

S804, the policy management function network element parses the first data packet to obtain demand information of the data flow.

S805, the policy management function network element determines a routing-forwarding rule and queue information according to the demand information and the queue configuration rule, and obtains the message processing logic according to the routing-forwarding rule and the queue information.

S806, the policy management function network element sends the message processing logic to the network control function network element.

S807, the network control function network element configures the message processing logic for a target forwarding device, for the target forwarding device to forward corresponding data flow based on the message processing logic.

It should be noted that the methods and principles of steps S801-S802 are similar to those of steps S301-S302 in the embodiment shown in FIG. 3, and the methods and principles of steps S803-S805 are similar to those of steps S505-S506 in the embodiment shown in FIG. 5, and the methods and principles of steps S806-S807 are similar to those of steps S506-S507 in the embodiment shown in FIG. 5. For the specific implementation, reference can be made to the above embodiments, which is not repeated here.

In the embodiment of the present disclosure, various manners for acquiring the message processing logic are provided, they can be flexibly applied to various network architectures to solve the problem that the latency cannot be determined in the forwarding process of deterministic data flow in different network architectures.

In other embodiments, the demand information of the data flow may be obtained without the first data packet. Specifically, the above step S201 specifically includes the following solutions:
(1) the policy management function network element acquiring demand information of the data flow;
(2) the policy management function network element determining a routing-forwarding rule according to the demand information;
(3) at least one network element of the policy management function network element or the network control function network element determining queue information according to the routing-forwarding rule and obtaining the message processing logic according to the queue information and the routing-forwarding rule.

Specifically, when the message processing logic is obtained without the first data packet, there are also various implementations. Next, the specific solutions of various implementations are described in detail with the drawings.

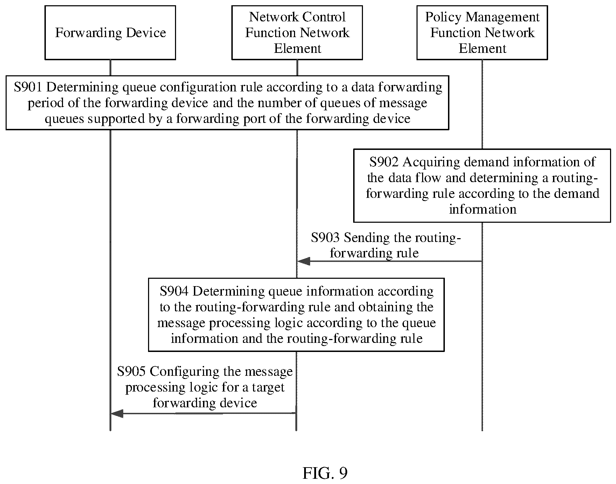

In a first implementation, FIG. 9 is a a flowchart 7 of a configuration mode for message processing logic provided by an embodiment of the present disclosure. As shown in FIG. 9, a configuration mode for message processing logic provided by an embodiment of the present disclosure includes the following steps.

S901, determining the queue configuration rule according to the data forwarding period of the forwarding device and the number of queues of message queues supported by the forwarding port of the forwarding device.

It should be noted that in the embodiment of the present disclosure, there is no specific limitation on the network element device that acquires the queue configuration rule. On the one hand, the network control function network element can acquire the queue configuration rule of the forwarding device, and on the other hand, the policy management function network element can also obtain the queue configuration rule of the forwarding device.

It should be understood that any one of the network control function network element and the policy management function network element can report the queue configuration rule to another network element after acquiring the queue configuration rule.

Optionally, after the queue configuration rule is obtained, the queue configuration rule, a forwarding period of each forwarding device and forwarding time of each message queue can be sent to a corresponding forwarding device for the forwarding device to divide the forwarding time of each message queue.

Specifically, when the policy management function network element acquires the queue configuration rule, the policy management function network element may first send the queue configuration rule to the network management function network element, and the network management function network element will send the queue configuration rule to the forwarding device for configuration.

The forwarding port of each forwarding device may include a plurality of message queues, and the queue configuration rule is indicative of a data transmission rate (e.g., a maximum transmission rate, a minimum transmission rate and an average transmission rate) of each message queue, the priority of each message queue when forwarding data flow, and corresponding forwarding time of each message queue in the forwarding period.

Specifically, in acquiring the queue configuration rule by any of the above-mentioned network elements, firstly, based on a network topology (that is, a location of the forwarding device), the number of queues of message queues supported by the forwarding port of the forwarding device and the forwarding period of the forwarding port are determined, and at the same time, the data transmission rate of each message queue of the forwarding port and the priority of each message queue when forwarding data flow are obtained.

Further, according to a duration of the forwarding period and the number of queues, the forwarding period is evenly distributed to each message queue, so as to obtain the forwarding time of each message queue in the forwarding period, where the durations of the forwarding times corresponding to respective message queues are the same.

Furthermore, the queue configuration rule is obtained based on the data transmission rate of each message queue, the priority of each message queue when forwarding data flow and the forwarding time of each message queue in the forwarding period.

S902, the policy management function network element acquires demand information of the data flow and determines a routing-forwarding rule according to the demand information.

Specifically, the policy management function network element may obtain the demand information of the data flow through a business layer and/or an application layer, and the specific acquisition manner is not limited in the embodiment of the present disclosure.

S903, the policy management function network element sends the routing-forwarding rule to the network control function network element.

S904, the network control function network element determines queue information according to the routing-forwarding rule and obtains the message processing logic according to the queue information and the routing-forwarding rule.

It should be noted that the methods and principles of steps S902-S904 are similar to those of steps S305-S307 in the embodiment shown in FIG. 3, for their specific implementations, reference can be made to the embodiment shown in FIG. 3, which is not repeated here.

S905, the network control function network element configures the message processing logic for a target forwarding device, for the target forwarding device to forward corresponding data flow based on the message processing logic.

Specifically, the network control function network element sends a configuration request to the forwarding device, where the configuration request carries the message processing logic. Correspondingly, after receiving the configuration request, the forwarding device acquires the message processing logic carried therein, and configures each forwarding port according to the message processing logic.

Optionally, after the forwarding device has configured the message processing logic, it may send a configuration response to the network control function network element, where the configuration response is used to indicate that the configuration of the message processing logic is completed.

Optionally, after receiving the configuration response sent by the forwarding device, the network control function network element may also send a user plane establishment response to the policy management function network element. The user plane establishment response is used to indicate that the configuration of the message processing logic for the forwarding device is completed.

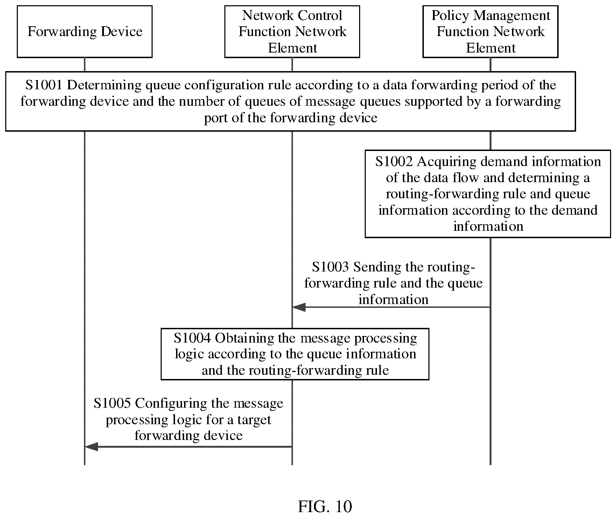

In a second implementation, FIG. 10 is a flowchart 8 of a configuration mode for message processing logic provided by an embodiment of the present disclosure. As shown in FIG. 10, the configuration mode for message processing logic provided by the embodiment of the present disclosure includes the following steps.

S1001, determining the queue configuration rule according to the data forwarding period of the forwarding device and the number of queues of message queues supported by the forwarding port of the forwarding device.

S 1002, the policy management function network element acquires demand information of the data flow and determines a routing-forwarding rule and queue information according to the demand information.

S1003, the policy management function network element sends the routing-forwarding rule and the queue information to the network control function network element.

S 1004, the network control function network element generates the message processing logic according to the routing-forwarding rule and the queue information.

It should be noted that the methods and principles of steps S1001 are similar to those of step S301 in the embodiment shown in FIG. 3, and the methods and principles of steps S1002-S1004 are similar to those of steps S405-S407 in the embodiment shown in FIG. 4. For the specific implementation, reference can be made to the above embodiments, which is not repeated here.

S1005, the network control function network element configures the message processing logic for a target forwarding device, for the target forwarding device to forward corresponding data flow based on the message processing logic.

Specifically, the network control function network element sends a configuration request to the forwarding device, where the configuration request carries the message processing logic. Correspondingly, after receiving the configuration request, the forwarding device acquires the message processing logic carried therein, and configures each forwarding port according to the message processing logic.

Optionally, after the forwarding device has configured the message processing logic, it may send a configuration response to the network control function network element, where the configuration response is used to indicate that the configuration of the message processing logic is complete.

Optionally, after receiving the configuration response sent by the forwarding device, the network control function network element may also send a user plane establishment response to the policy management function network element. The user plane establishment response is used to indicate that the configuration of the message processing logic for the forwarding device is completed.

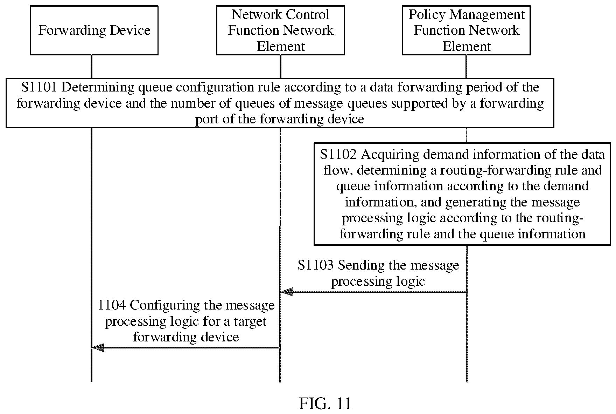

In a third implementation, FIG. 11 is a flowchart 9 of a configuration mode for message processing logic provided by an embodiment of the present disclosure. As shown in FIG. 11, a configuration mode for message processing logic provided by an embodiment of the present disclosure includes the following steps.

S1101, determining the queue configuration rule according to the data forwarding period of the forwarding device and the number of queues of message queues supported by the forwarding port of the forwarding device.

S 1102, the policy management function network element acquires demand information of the data flow, determines a routing-forwarding rule and queue information according to the demand information, and generates the message processing logic according to the routing-forwarding rule and the queue information.

S1103, the policy management function network element sends the message processing logic to the network control function network element.

It should be noted that the methods and principles of steps 51101 are similar to those of step S301 in the embodiment shown in FIG. 3, and the methods and principles of steps S1102-S1003 are similar to those of steps S505-S506 in the embodiment shown in FIG. 5. For the specific implementation, reference can be made to the above embodiments, which is not repeated here.

S 1104, the network control function network element configures the message processing logic for a target forwarding device, for the target forwarding device to forward corresponding data flow based on the message processing logic.

Specifically, the network control function network element sends a configuration request to the forwarding device, where the configuration request carries the message processing logic. Correspondingly, after receiving the configuration request, the forwarding device acquires the message processing logic carried therein, and configures each forwarding port according to the message processing logic.

Optionally, after the forwarding device has configured the message processing logic, it may send a configuration response to the network control function network element, where the configuration response is used to indicate that the configuration of the message processing logic is complete.

Optionally, after receiving the configuration response sent by the forwarding device, the network control function network element may also send a user plane establishment response to the policy management function network element. The user plane establishment response is used to indicate that the configuration of the message processing logic for the forwarding device is completed.

It should be understood that although the steps in the flowchart in the above embodiment are shown in sequence as indicated by the arrows, these steps are not necessarily executed in the order as indicated by the arrows. Unless explicitly stated herein, the execution of these steps is not strictly limited in order, and they may be executed in other orders. Moreover, at least a portion of the steps in the figure may include a plurality of sub-steps or stages. The sub-steps and the stages may not necessarily be completed at the same moment, but may be executed at different moments, and the order of execution may not necessarily be sequential, but they may be executed in turn or alternately with at least a part of other steps or sub-steps or stages of the other steps.

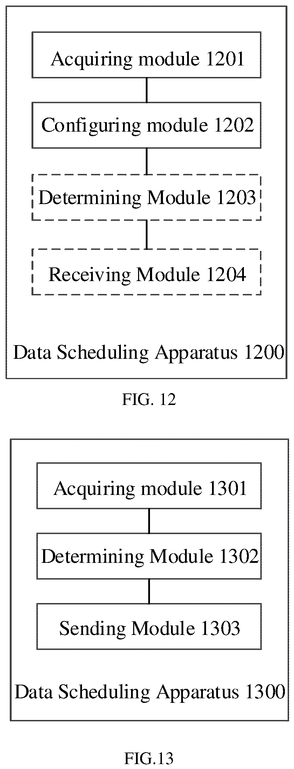

An embodiment of the present disclosure provides a data scheduling apparatus, applied to a network control function network element. FIG. 12 is a structural diagram 1 of a data scheduling apparatus provided by an embodiment of the present disclosure. As shown in FIG. 12, the data scheduling apparatus 1200 includes:
an acquiring module 1201, adapted to acquire message processing logic of data flow, where a queue configuration rule is determined according to a data forwarding period of a forwarding device and a number of queues of message queues supported by a forwarding port of the forwarding device;
a configuring module 1202, adapted to configure the message processing logic for a target forwarding device for forwarding of corresponding data flow.

Optionally, the acquiring module 1201 is specifically adapted to: receive a first data packet sent by the forwarding device; and obtain the message processing logic based on the first data packet and the queue configuration rule.

Optionally, the acquiring module 1201 is specifically adapted to: parse the first data packet to obtain demand information of the data flow; and obtain the message processing logic according to the demand information and the queue configuration rule.

Optionally, the acquiring module 1201 is specifically adapted to: send the demand information to a policy management function network element; receive a routing-forwarding rule obtained by the policy management function network element according to the demand information and the queue configuration rule; obtain the message processing logic according to the routing-forwarding rule.

Optionally, the acquiring module 1201 is specifically adapted to: send the first data packet to a policy management function network element for the policy management function network element to obtain demand information of the data flow according to the first data packet; receive a routing-forwarding rule obtained by the policy management function network element according to the demand information and the queue configuration rule; obtain the message processing logic according to the routing-forwarding rule.

Optionally, the acquiring module 1201 is specifically adapted to: determine queue information of the data flow according to the routing-forwarding rule, where the queue information is indicative of a queue for sending the data flow; obtain the message processing logic according to the queue information and the routing-forwarding rule.

Optionally, the acquiring module 1201 is specifically adapted to: receive queue information obtained by the policy management function network element according to the demand information; and obtain the message processing logic according to the routing-forwarding rule and the queue information.

Optionally, the acquiring module 1201 is specifically adapted to: parse the first data packet to obtain demand information of the data flow; send the demand information to a policy management function network element; and receive the message processing logic obtained by the policy management function network element according to the demand information.

Optionally, the acquiring module 1201 is specifically adapted to: send the first data packet to a policy management function network element; and receive the message processing logic obtained by the policy management function network element according to the first data packet.

Optionally, the data scheduling apparatus 1200 further includes: a determining module 1203, adapted to determine the queue configuration rule of the forwarding port according to the data forwarding period of the forwarding device and the number of queues of message queues supported by the forwarding port of the forwarding device; or, a receiving module 1204, adapted to receive the queue configuration rule sent by a policy management function network element; where the queue configuration rule is indicative of data forwarding time of each of the message queues in a forwarding period of the forwarding port, and a duration of the data forwarding time is the data forwarding period of the forwarding device.

It should be noted here that the data scheduling apparatus 1200 provided by the present disclosure can implement all the steps of the data scheduling method corresponding to the network control function network element in the above method embodiments, and can achieve the same technical effects, so the parts of this embodiment which are same as the method embodiments and the beneficial effects will not be specifically detailed here.

An embodiment of the present disclosure provides a data scheduling apparatus, applied to a policy management function network element. FIG. 13 is a structural diagram 2 of a data scheduling apparatus provided by an embodiment of the present disclosure. As shown in FIG. 13, the data scheduling apparatus 1300 includes:
an acquiring module 1301, adapted to acquire demand information of data flow;
a determining module 1302, adapted to determine a routing-forwarding rule according to the demand information and a queue configuration rule and determine message processing logic of the data flow according to the routing-forwarding rule, where the queue configuration rule is determined according to a data forwarding period of a forwarding device and the number of queues of message queues supported by a forwarding port of the forwarding device;
a sending module 1303, adapted to send the message processing logic to a network control function network element, where the message processing logic is used for forwarding of corresponding data flow.

Optionally, the determining module 1302 is specifically adapted to: determine, according to the demand information and the queue configuration rule, queue information used for processing the data flow; and determine the message processing logic according to the routing-forwarding rule and the queue information.

It should be noted here that the data scheduling apparatus 1300 provided by the present disclosure can implement all the steps of the data scheduling method corresponding to the policy management function network element in the above method embodiments, and can achieve the same technical effects, so the parts of this embodiment which are same as the method embodiments and the beneficial effects will not be specifically detailed here.

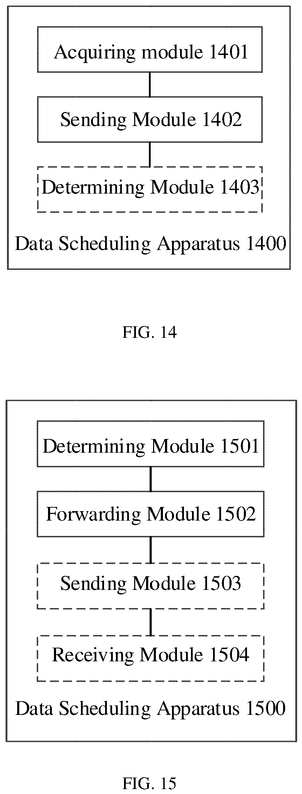

An embodiment of the present disclosure provides a data scheduling apparatus, applied to a policy management function network element. FIG. 14 is a structural diagram 3 of a data scheduling apparatus provided by an embodiment of the present disclosure. As shown in FIG. 14, the data scheduling apparatus 1400 includes:
an acquiring module 1401, adapted to acquire demand information of data flow; obtain a routing-forwarding rule according to the demand information and a queue configuration rule, where the queue configuration rule is determined according to a data forwarding period of a forwarding device and the number of queues of message queues supported by a forwarding port of the forwarding device;
a sending module 1402, adapted to send the routing-forwarding rule to a network control function network element, where the routing-forwarding rule is used for determining message processing logic and the message processing logic is used for forwarding of corresponding data flow.

Optionally, the sending module 1402 is specifically adapted to: determine queue information according to the demand information and the queue configuration rule; send the queue information and the routing-forwarding rule to the network control function network element for the network control function network element to determine the message processing logic according to the routing-forwarding rule and the queue information.

Optionally, the acquiring module 1401 is specifically adapted to: receive the demand information of the data flow in a first data packet sent by the network control function network element.

Optionally, the acquiring module 1401 is specifically adapted to: receive a first data packet sent by the network control function network element; and parse the first data packet to obtain the demand information of the data flow.

Optionally, the data scheduling apparatus 1400 further includes: a determining module 1403, adapted to determine the queue configuration rule of the forwarding port according to the data forwarding period of the forwarding device and the number of queues of message queues supported by the forwarding port of the forwarding device; or, receive the queue configuration rule sent by the network control function network element; where the queue configuration rule is indicative of data forwarding time of each of the message queues in a forwarding period of the forwarding port, and a duration of the data forwarding time is the data forwarding period of the forwarding device.

It should be noted here that the data scheduling apparatus 1400 provided by the present disclosure can implement all the steps of the data scheduling method corresponding to the policy management function network element in the above method embodiments, and can achieve the same technical effects, so the parts of this embodiment which are same as the method embodiments and the beneficial effects will not be specifically detailed here.

An embodiment of the present disclosure provides a data scheduling apparatus, applied to a forwarding device. FIG. 15 is a structural diagram 4 of a data scheduling apparatus provided by an embodiment of the present disclosure. As shown in FIG. 15, the data scheduling apparatus 1500 includes:
a determining module 1501, adapted to, in response to receiving data flow to be processed, determine a target queue for forwarding the data flow to be processed based on message processing logic and determine forwarding time of the data flow to be processed based on a queue configuration rule of the forwarding device, where the message processing logic is configured for the forwarding device by a network control function network element; a forwarding module 1502, adapted to forward the data flow to be processed at the forwarding time through the target queue.

Optionally, the data scheduling apparatus 1500 further includes: a sending module 1503, adapted to send a first data packet to the network control function network element;
a receiving module 1504, adapted to receive the message processing logic obtained by the network control function network element according to the first data packet.

It should be noted here that the data scheduling apparatus 1500 provided by the present disclosure can implement all the steps of the data scheduling method corresponding to the forwarding device in the above method embodiments, and can achieve the same technical effects, so the parts of this embodiment which are same as the method embodiments and the beneficial effects will not be specifically detailed here.

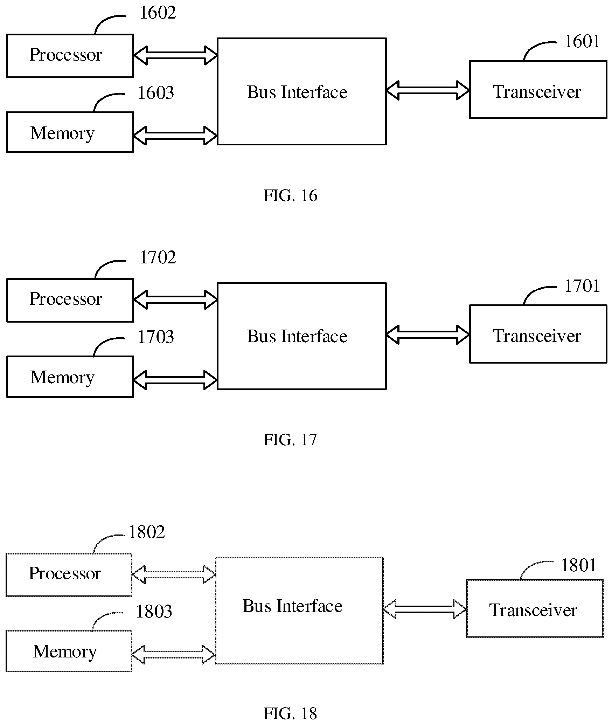

An embodiment of the present disclosure provides a network control function network element. FIG. 16 is a structural diagram of the network control function network element provided by an embodiment of the present disclosure. As shown in FIG. 16, the network control function network element includes a transceiver 1601, a processor 1602 and a memory 1603.

The transceiver 1601 is configured to receive and send data under control of the processor 1602. In FIG. 16, a bus architecture may include any number of interconnected buses and bridges. Specifically, various circuits of one or more processors represented by the processor 1602 and the memory represented by the memory 1603 are linked together. The bus architecture may also link together various other circuits, such as a peripheral device, a voltage regulator and a power management circuit, which are well known in the art and are therefore not described further herein. A bus interface provides an interface. The transceiver 1601 may be a plurality of elements, that is, including a transmitter and a receiver, and providing units for communicating with various other apparatuses on transmission mediums. These transmission mediums include transmission mediums such as a wireless channel, a wired channel, an optical cable and the like. The processor 1602 is responsible for managing the bus architecture and general processing, and the memory 1603 can store data used by the processor 1602 when performing operations.

The processor 1602 is responsible for managing the bus architecture and general processing, and the memory 1603 can store data used by the processor 1602 when performing operations.

Optionally, the processor 1602 can be a central processor unit (central processing unit, CPU), an application-specific integrated circuit (Application Specific Integrated Circuit, ASIC), a field-programmable gate array (Field-Programmable Gate Array, FPGA) or a complex programmable logic device (Complex Programmable Logic Device, CPLD), and the processor may also adopt a multi-core architecture. The processor 1602 calls a computer program stored in the memory 1603 to execute any method related to the terminal device provided by the embodiment of the present disclosure according to obtained executable instructions, where the processor and the memory may also be physically arranged separately.

Specifically, the processor 1602 is adapted to read the computer program in the memory and perform the following operations: acquiring message processing logic of data flow, where the message processing logic is obtained based on a queue configuration rule of a forwarding port of a forwarding device and the queue configuration rule is determined according to a data forwarding period of the forwarding device and a number of queues of message queues supported by the forwarding port of the forwarding device; configuring the message processing logic for a target forwarding device for forwarding of corresponding data flow.

Optionally, acquiring the message processing logic of the data flow includes: receiving a first data packet sent by the forwarding device; and obtaining the message processing logic based on the first data packet and the queue configuration rule.

Optionally, obtaining the message processing logic based on the first data packet and the queue configuration rule includes: parsing the first data packet to obtain demand information of the data flow; and obtaining the message processing logic according to the demand information and the queue configuration rule.

Optionally, obtaining the message processing logic according to the demand information and the queue configuration rule includes: sending the demand information to a policy management function network element; receiving a routing-forwarding rule obtained by the policy management function network element according to the demand information and the queue configuration rule; obtaining the message processing logic according to the routing-forwarding rule.

Optionally, obtaining the message processing logic based on the first data packet and the queue configuration rule includes: sending the first data packet to a policy management function network element for the policy management function network element to obtain demand information of the data flow according to the first data packet; receiving a routing-forwarding rule obtained by the policy management function network element according to the demand information and the queue configuration rule; obtaining the message processing logic according to the routing-forwarding rule.

Optionally, obtaining the message processing logic according to the routing-forwarding rule includes: determining queue information of the data flow according to the routing-forwarding rule, where the queue information is indicative of a queue for sending the data flow; obtaining the message processing logic according to the queue information and the routing-forwarding rule.

Optionally, obtaining the message processing logic according to the routing-forwarding rule includes: receiving queue information obtained by the policy management function network element according to the demand information; and obtaining the message processing logic according to the routing-forwarding rule and the queue information.

Optionally, obtaining the message processing logic based on the first data packet and the queue configuration rule includes:
parsing the first data packet to obtain demand information of the data flow; sending the demand information to a policy management function network element; receiving the message processing logic obtained by the policy management function network element according to the demand information.

Optionally, obtaining the message processing logic based on the first data packet and the queue configuration rule includes: sending the first data packet to a policy management function network element; and receiving the message processing logic obtained by the policy management function network element according to the first data packet.

Optionally, before obtaining the message processing logic of the data flow, the processor 1602 is further adapted to: determine the queue configuration rule of the forwarding port according to the data forwarding period of the forwarding device and the number of queues of message queues supported by the forwarding port of the forwarding device; or, receive the queue configuration rule sent by a policy management function network element; where the queue configuration rule is indicative of data forwarding time of each of the message queues in a forwarding period of the forwarding port, and a duration of the data forwarding time is the data forwarding period of the forwarding device.

It should be noted here that the network control function network element provided by the present disclosure can implement all the method steps implemented by the network control function network element in the above method embodiments, and can achieve the same technical effects, so the parts of this embodiment which are same as the method embodiments and the beneficial effects will not be specifically detailed here.

An embodiment of the present disclosure provides a policy management function network element. FIG. 17 is a structural diagram of the policy management function network element provided by an embodiment of the present disclosure. As shown in FIG. 17, the policy management function network element includes a transceiver 1701, a processor 1702 and a memory 1703.

The transceiver 1701 is configured to receive and send data under control of the processor 1702. In FIG. 17, a bus architecture may include any number of interconnected buses and bridges. Specifically, various circuits of one or more processors represented by the processor 1702 and the memory represented by the memory 1703 are linked together. The bus architecture may also link together various other circuits, such as a peripheral device, a voltage regulator and a power management circuit, which are well known in the art and are therefore not described further herein. A bus interface provides an interface. The transceiver 1701 may be a plurality of elements, that is, including a transmitter and a receiver, and providing units for communicating with various other apparatuses on transmission mediums. These transmission mediums include transmission mediums such as a wireless channel, a wired channel, an optical cable and the like. The processor 1702 is responsible for managing the bus architecture and general processing, and the memory 1703 can store data used by the processor 1702 when performing operations.

The processor 1702 is responsible for managing the bus architecture and general processing, and the memory 1703 can store data used by the processor 1702 when performing operations.

Optionally, the processor 1702 can be a central processor unit (central processing unit, CPU), an application-specific integrated circuit (Application Specific Integrated Circuit, ASIC), a field-programmable gate array (Field-Programmable Gate Array, FPGA) or a complex programmable logic device (Complex Programmable Logic Device, CPLD), and the processor may also adopt a multi-core architecture. The processor 1702 calls a computer program stored in the memory 1703 to execute any method related to the terminal device provided by the embodiment of the present disclosure according to obtained executable instructions, where the processor and the memory may also be physically arranged separately.

In some embodiments, the processor 1702 is adapted to read the computer program in the memory and perform the following operations: acquiring demand information of data flow; determining a routing-forwarding rule according to the demand information and a queue configuration rule, where the queue configuration rule is determined according to a data forwarding period of a forwarding device and the number of queues of message queues supported by a forwarding port of the forwarding device; determining message processing logic of the data flow according to the routing-forwarding rule; sending the message processing logic to a network control function network element, where the message processing logic is used for forwarding of corresponding data flow.

Optionally, determining the message processing logic according to the routing-forwarding rule includes: determining, according to the demand information and the queue configuration rule, queue information used for processing the data flow; and determining the message processing logic according to the routing-forwarding rule and the queue information.

In other embodiments, the processor 1702 is further adapted to read the computer program in the memory and perform the following operations: acquiring demand information of data flow; obtaining a routing-forwarding rule according to the demand information and a queue configuration rule, where the queue configuration rule is determined according to a data forwarding period of a forwarding device and the number of queues of message queues supported by a forwarding port of the forwarding device; and sending the routing-forwarding rule to a network control function network element, where the routing-forwarding rule is used for determining message processing logic and the message processing logic is used for forwarding of corresponding data flow.

Optionally, sending the routing-forwarding rule to the network control function network element includes: determining queue information according to the demand information and the queue configuration rule; sending the queue information and the routing-forwarding rule to the network control function network element for the network control function network element to determine the message processing logic according to the routing-forwarding rule and the queue information.

Optionally, acquiring the demand information of the data flow includes: receiving the demand information of the data flow in a first data packet sent by the network control function network element.

Optionally, acquiring the demand information of the data flow includes: receiving a first data packet sent by the network control function network element; and parsing the first data packet to obtain the demand information of the data flow.

Optionally, before acquiring the demand information of the data flow, the processor is further adapted to: determine the queue configuration rule of the forwarding port according to the data forwarding period of the forwarding device and the number of queues of message queues supported by the forwarding port of the forwarding device; or, receive the queue configuration rule sent by the network control function network element; where the queue configuration rule is indicative of data forwarding time of each of the message queues in a forwarding period of the forwarding port, and a duration of the data forwarding time is the data forwarding period of the forwarding device.

It should be noted here that the policy management function network element provided by the present disclosure can implement all the method steps implemented by the policy management function network element in the above method embodiments, and can achieve the same technical effects, so the parts of this embodiment which are same as the method embodiments and the beneficial effects will not be specifically detailed here.

An embodiment of the present disclosure provides a forwarding device. FIG. 18 is a structural schematic diagram of the forwarding device provided by the embodiment of the present disclosure. As shown in FIG. 18, the forwarding device 1800 includes a transceiver 1801, a processor 1802 and a memory 1803.

The transceiver 1801 is configured to receive and send data under control of the processor 1802. In FIG. 18, a bus architecture may include any number of interconnected buses and bridges. Specifically, various circuits of one or more processors represented by the processor 1802 and the memory represented by the memory 1803 are linked together. The bus architecture may also link together various other circuits, such as a peripheral device, a voltage regulator and a power management circuit, which are well known in the art and are therefore not described further herein. A bus interface provides an interface. The transceiver 1801 may be a plurality of elements, that is, including a transmitter and a receiver, and providing units for communicating with various other apparatuses on transmission mediums. These transmission mediums include transmission mediums such as a wireless channel, a wired channel, an optical cable and the like. The processor 1802 is responsible for managing the bus architecture and general processing, and the memory 1803 can store data used by the processor 1802 when performing operations.

The processor 1802 is responsible for managing the bus architecture and general processing, and the memory 1803 can store data used by the processor 1802 when performing operations.

Optionally, the processor 1802 can be a central processor unit (central processing unit, CPU), an application-specific integrated circuit (Application Specific Integrated Circuit, ASIC), a field-programmable gate array (Field-Programmable Gate Array, FPGA) or a complex programmable logic device (Complex Programmable Logic Device, CPLD), and the processor may also adopt a multi-core architecture. The processor 1802 calls a computer program stored in the memory 1803 to execute any method related to the terminal device provided by the embodiment of the present disclosure according to obtained executable instructions, where the processor and the memory may also be physically arranged separately.

In some embodiments, the processor 1802 is adapted to read the computer program in the memory and perform the following operations:
in response to receiving data flow to be processed, determining a target queue for forwarding the data flow to be processed based on message processing logic; determining forwarding time of the data flow to be processed based on a queue configuration rule of the forwarding device, where the message processing logic is configured for the forwarding device by a network control function network element; forwarding the data flow to be processed at the forwarding time through the target queue.

Optionally, the processor is further adapted to: send a first data packet to the network control function network element; and receive the message processing logic obtained by the network control function network element according to the first data packet.

It should be noted here that the forwarding device provided by the present disclosure can implement all the method steps implemented by the forwarding device in the above method embodiments, and can achieve the same technical effects, so the parts of this embodiment that are same as the method embodiments and the beneficial effects will not be specifically detailed here.

It should be noted that the division of units in the embodiments of the present disclosure is schematic and is only a logical function division, and there may be other division manners in actual implementations. In addition, the functional units in the embodiments of the present disclosure may be integrated into one processing unit, or each unit may physically exist alone, or two or more units may be integrated into one unit. The above-integrated units can be realized either in the form of hardware or in the form of software functional units.

The integrated units may be stored in a processor-readable storage medium if implemented in the form of software functional units and sold or used as an independent product. Based on this understanding, the essence of the technical solution of the present disclosure, or the part that contributes to the prior art, or all or a part of this technical solution may be embodied in the form of a software product. The computer software product is stored in a storage medium and includes several instructions used for a computer device (which may be a personal computer, a server, or a network device, etc.) or a processor (processor) to perform all or part of the steps of the methods described in various embodiments of the present disclosure. The above storage medium includes various mediums that can store program code, such as: a USB flash drive, a removable hard disk, a read-only memory (Read-Only Memory, ROM), a random access memory (Random Access Memory, RAM), a magnetic disk or an optical disk.

Embodiments of the present disclosure provide a processor-readable storage medium, the processor-readable storage medium storing a computer program, where the computer program is used to cause the processor to execute the network energy conservation method provided in the embodiments of the present disclosure, so that the processor can implement all the steps of the network energy conservation method implemented by the network device in the above method embodiments, and can achieve the same technical effects, so the parts of this embodiment which are same as the method embodiments and the beneficial effects will not be specifically detailed here. The processor-readable storage medium may be any available medium or data storage device that the processor is able to access, including, but not limited to, a magnetic memory (e.g., a floppy disk, a hard disk, a magnetic tape, a magneto-optical disk (MO), etc.), an optical memory (e.g., a CD, a DVD, a BD, a HVD, etc.), and a semiconductor memory (e.g., a ROM, an EPROM, an EEPROM, a non-volatile memory (NAND FLASH), a solid-state drive (SSD)), etc.

An embodiment of the present disclosure also provides a computer program product containing instructions. A computer program is stored in a storage medium, and at least one processor can read the computer program from the storage medium. When executing the computer program, the at least one processor can implement all the steps of the data scheduling method implemented by the network device in the above method embodiments, and can achieve the same technical effect. Therefore, the parts of this embodiment which are same as the method embodiments and the beneficial effects will not be specifically detailed here.

An embodiment of the present disclosure also provides a communication system including a network device and any one or more of the following: a terminal device, a core network, a centralized unit CU or a distributed unit DU. The network device can implement all the method steps in the above data scheduling method embodiments, and can achieve the same technical effects. The parts of this embodiment which are same as the method embodiments and the beneficial effects will not be specifically detailed here.

It should be understood by those skilled in the art that the embodiments of the present disclosure may be provided as a method, a system, or a computer program product. Therefore, the present disclosure can take the form of an entire hardware embodiment, an entire software embodiment, or an embodiment combining software and hardware aspects. Moreover, the present disclosure may take the form of a computer program product implemented on one or more computer-usable storage mediums (including, but not limited to a magnetic disk memory and an optical memory, etc.) that contain computer-usable program codes therein.

The present disclosure is described with reference to signaling interaction schematic diagrams and/or block diagrams of the method, apparatus, and computer program product according to embodiments of the present disclosure. It should be understood that each flow and/or block in the signaling interaction schematic diagrams and/or block diagrams, and combinations of the flows and/or blocks in the signaling interaction schematic diagrams and/or block diagrams can be implemented by computer-executable instructions. These computer-executable instructions may be provided to a processor of a general-purpose computer, a special-purpose computer, an embedded processor or other programmable data processing devices to produce a machine, such that the instructions executed by the processor of the computer or the other programmable data processing devices produce an apparatus for implementing the functions specified in one or more flows of the signaling interaction schematic diagrams and/or one or more blocks of the block diagrams. These processor-executable instructions may also be stored in a processor-readable memory that can direct a computer or other programmable data processing devices to function in a particular manner, such that the instructions stored in the processor-readable memory produce an article of manufacture including an instruction apparatus that implements the functions specified in one or more flows of the signaling interaction schematic diagrams and/or one or more blocks of the block diagrams.

These processor-executable instructions may also be loaded onto a computer or other programmable data processing devices, such that a series of operational steps are performed on the computer or other programmable devices to produce computer-implemented processing, such that the instructions executed on the computer or other programmable devices provide steps for implementing the functions specified in one or more flows of the flowcharts and/or one or more blocks of the signaling interaction schematic diagrams.

Obviously, those skilled in the art can make various modifications and variations to the present disclosure without departing from the spirit and scope of the present disclosure. Thus, if these modifications and variations of the present disclosure are within the scope of the claims of the present disclosure and their technical equivalents, the present disclosure is also intended to include such modifications and variations.

## Claims

1. A data scheduling method, **characterized in that** the method is applied to a network control function network element, and comprises:
acquiring message processing logic of data flow, wherein the message processing logic is obtained based on a queue configuration rule of a forwarding port of a forwarding device and the queue configuration rule is determined according to a data forwarding period of the forwarding device and a number of queues of message queues supported by the forwarding port of the forwarding device;
configuring the message processing logic for a target forwarding device for forwarding of corresponding data flow.

2. The data scheduling method according to claim 1, wherein acquiring the message processing logic of the data flow comprises:
receiving a first data packet sent by the forwarding device;
obtaining the message processing logic based on the first data packet and the queue configuration rule.

3. The data scheduling method according to claim 2, wherein obtaining the message processing logic based on the first data packet and the queue configuration rule comprises:
parsing the first data packet to obtain demand information of the data flow;
obtaining the message processing logic according to the demand information and the queue configuration rule.

4. The data scheduling method according to claim 3, wherein obtaining the message processing logic according to the demand information and the queue configuration rule comprises:
sending the demand information to a policy management function network element;
receiving a routing-forwarding rule obtained by the policy management function network element according to the demand information and the queue configuration rule;
obtaining the message processing logic according to the routing-forwarding rule.

5. The data scheduling method according to claim 2, wherein obtaining the message processing logic based on the first data packet and the queue configuration rule comprises:
sending the first data packet to a policy management function network element for the policy management function network element to obtain demand information of the data flow according to the first data packet;
receiving a routing-forwarding rule obtained by the policy management function network element according to the demand information and the queue configuration rule;
obtaining the message processing logic according to the routing-forwarding rule.

6. The data scheduling method according to claim 4 or 5, wherein obtaining the message processing logic according to the routing-forwarding rule comprises:
determining queue information of the data flow according to the routing-forwarding rule, wherein the queue information is indicative of a queue for sending the data flow;
obtaining the message processing logic according to the queue information and the routing-forwarding rule.

7. The data scheduling method according to claim 4 or 5, wherein obtaining the message processing logic according to the routing-forwarding rule comprises:
receiving queue information obtained by the policy management function network element according to the demand information;
obtaining the message processing logic according to the routing-forwarding rule and the queue information.

8. The data scheduling method according to claim 2, wherein obtaining the message processing logic based on the first data packet and the queue configuration rule comprises:
parsing the first data packet to obtain demand information of the data flow;
sending the demand information to a policy management function network element;
receiving the message processing logic obtained by the policy management function network element according to the demand information.

9. The data scheduling method according to claim 2, wherein obtaining the message processing logic based on the first data packet and the queue configuration rule comprises:
sending the first data packet to a policy management function network element;
receiving the message processing logic obtained by the policy management function network element according to the first data packet.

10. The data scheduling method according to claim 1, before acquiring the message processing logic of the data flow, further comprising:
determining the queue configuration rule of the forwarding port according to the data forwarding period of the forwarding device and the number of queues of message queues supported by the forwarding port of the forwarding device; or, receiving the queue configuration rule sent by a policy management function network element;
wherein the queue configuration rule is indicative of data forwarding time of each of the message queues in a forwarding period of the forwarding port, and a duration of the data forwarding time is the data forwarding period of the forwarding device.

11. A data scheduling method, **characterized in that** the method is applied to a policy management function network element, and comprises:
acquiring demand information of data flow;
determining a routing-forwarding rule according to the demand information and a queue configuration rule, wherein the queue configuration rule is determined according to a data forwarding period of a forwarding device and a number of queues of message queues supported by a forwarding port of the forwarding device;
determining message processing logic of the data flow according to the routing-forwarding rule;
sending the message processing logic to a network control function network element, wherein the message processing logic is indicative of forwarding of corresponding data flow.

12. The data scheduling method according to claim 11, wherein determining the message processing logic according to the routing-forwarding rule comprises:
determining, according to the demand information and the queue configuration rule, queue information used for processing the data flow;
determining the message processing logic according to the routing-forwarding rule and the queue information.

13. A data scheduling method, **characterized in that** the method is applied to a policy management function network element, and comprises:
acquiring demand information of data flow;
obtaining a routing-forwarding rule according to the demand information and a queue configuration rule, wherein the queue configuration rule is determined according to a data forwarding period of a forwarding device and a number of queues of message queues supported by a forwarding port of the forwarding device;
sending the routing-forwarding rule to a network control function network element, wherein the routing-forwarding rule is used for determining message processing logic and the message processing logic is used for forwarding of corresponding data flow.

14. The data scheduling method according to claim 13, wherein sending the routing-forwarding rule to the network control function network element comprises:
determining queue information according to the demand information and the queue configuration rule;
sending the queue information and the routing-forwarding rule to the network control function network element for the network control function network element to determine the message processing logic according to the routing-forwarding rule and the queue information.

15. The data scheduling method according to any one of claims 11 to 14, wherein acquiring the demand information of the data flow comprises:
receiving the demand information of the data flow in a first data packet sent by the network control function network element.

16. The data scheduling method according to any one of claims 11 to 14, wherein acquiring the demand information of the data flow comprises:
receiving a first data packet sent by the network control function network element;
parsing the first data packet to obtain the demand information of the data flow.

17. The data scheduling method according to any one of claims 11 to 14, before acquiring the demand information of the data flow, further comprising:
determining the queue configuration rule of the forwarding port according to the data forwarding period of the forwarding device and the number of queues of message queues supported by the forwarding port of the forwarding device; or, receiving the queue configuration rule sent by the network control function network element;
wherein the queue configuration rule is indicative of data forwarding time of each of the message queues in a forwarding period of the forwarding port, and a duration of the data forwarding time is the data forwarding period of the forwarding device.

18. A data scheduling method, **characterized in that** the method is applied to a forwarding device, and comprises:
in response to receiving data flow to be processed, determining a target queue for forwarding the data flow to be processed based on message processing logic;
determining forwarding time of the data flow to be processed based on a queue configuration rule of the forwarding device, wherein the message processing logic is configured for the forwarding device by a network control function network element;
forwarding the data flow to be processed at the forwarding time through the target queue.

19. The data scheduling method according to claim 18, further comprising:
sending a first data packet to the network control function network element;
receiving the message processing logic obtained by the network control function network element according to the first data packet.

20. A data scheduling apparatus, **characterized in that** the apparatus is applied to a network control function network element, and comprises:
an acquiring module, adapted to acquire message processing logic of data flow, wherein the message processing logic is obtained based on a queue configuration rule of a forwarding port of a forwarding device and the queue configuration rule is determined according to a data forwarding period of the forwarding device and a number of queues of message queues supported by the forwarding port of the forwarding device;
a configuring module, adapted to configure the message processing logic for a target forwarding device for forwarding of corresponding data flow.

21. A data scheduling apparatus, **characterized in that** the apparatus is applied to a policy management function network element, and comprises:
an acquiring module, adapted to acquire demand information of data flow;
a determining module, adapted to determine a routing-forwarding rule according to the demand information and a queue configuration rule; determine message processing logic of the data flow according to the routing-forwarding rule; wherein the queue configuration rule is determined according to a data forwarding period of a forwarding device and a number of queues of message queues supported by a forwarding port of the forwarding device;
a sending module, adapted to send the message processing logic to a network control function network element, wherein the message processing logic is used for forwarding of corresponding data flow.

22. A data scheduling apparatus, **characterized in that** the apparatus is applied to a policy management function network element, and comprises:
an acquiring module, adapted to acquire demand information of data flow; obtain a routing-forwarding rule according to the demand information and a queue configuration rule, wherein the queue configuration rule is determined according to a data forwarding period of a forwarding device and a number of queues of message queues supported by a forwarding port of the forwarding device;
a sending module, adapted to send the routing-forwarding rule to a network control function network element, wherein the routing-forwarding rule is used for determining message processing logic and the message processing logic is used for forwarding of corresponding data flow.

23. The data scheduling apparatus according to claim 22, further comprising:
a determining module, adapted to determine the queue configuration rule of the forwarding port according to the data forwarding period of the forwarding device and the number of queues of message queues supported by the forwarding port of the forwarding device; or, receiving the queue configuration rule sent by the policy management function network element;
wherein the queue configuration rule is indicative of data forwarding time of each of the message queues in a forwarding period of the forwarding port, and a duration of the data forwarding time is the data forwarding period of the forwarding device.

24. A data scheduling apparatus, **characterized in that** the apparatus is applied to a forwarding device, and comprises:
a determining module, adapted to: in response to receiving data flow to be processed, determine a target queue for forwarding the data flow to be processed based on message processing logic; determine forwarding time of the data flow to be processed based on a queue configuration rule of the forwarding device, wherein the message processing logic is configured for the forwarding device by a network control function network element;
a forwarding module, adapted to forward the data flow to be processed at the forwarding time through the target queue.

25. A network control function network element, **characterized by** comprising:
a memory, adapted to store a computer program;
a transceiver, adapted to receive and send data under control of a processor;
the processor, adapted to read the computer program in the memory and perform the following operations:
acquiring message processing logic of data flow, wherein the message processing logic is obtained based on a queue configuration rule of a forwarding port of a forwarding device and the queue configuration rule is determined according to a data forwarding period of the forwarding device and a number of queues of message queues supported by the forwarding port of the forwarding device;
configuring the message processing logic for a target forwarding device for forwarding of corresponding data flow.

26. A policy management function network element, **characterized by** comprising:
a memory, adapted to store a computer program;
a transceiver, adapted to receive and send data under control of a processor;
the processor, adapted to read the computer program in the memory and perform the following operations:
acquiring demand information of data flow;
determining a routing-forwarding rule according to the demand information and a queue configuration rule, wherein the queue configuration rule is determined according to a data forwarding period of a forwarding device and a number of queues of message queues supported by a forwarding port of the forwarding device;
determining message processing logic of the data flow according to the routing-forwarding rule;
sending the message processing logic to a network control function network element, wherein the message processing logic is used for forwarding of corresponding data flow.

27. A policy management function network element, **characterized by** comprising:
a memory, adapted to store a computer program;
a transceiver, adapted to receive and send data under control of a processor; and
the processor, adapted to read the computer program in the memory and perform the following operations:
acquiring demand information of data flow;
obtaining a routing-forwarding rule according to the demand information and a queue configuration rule, wherein the queue configuration rule is determined according to a data forwarding period of a forwarding device and a number of queues of message queues supported by a forwarding port of the forwarding device;
sending the routing-forwarding rule to a network control function network element, wherein the routing-forwarding rule is used for determining message processing logic and the message processing logic is used for forwarding of corresponding data flow.

28. A forwarding device, **characterized by** comprising:
a memory, adapted to store a computer program;
a transceiver, adapted to receive and send data under control of a processor;
the processor, adapted to read the computer program in the memory and perform the following operations:
in response to receiving data flow to be processed, determining a target queue for forwarding the data flow to be processed based on message processing logic;
determining forwarding time of the data flow to be processed based on a queue configuration rule of the forwarding device, wherein the message processing logic is configured for the forwarding device by a network control function network element;
forwarding the data flow to be processed at the forwarding time through the target queue.

29. A processor-readable storage medium, **characterized in that** the processor-readable storage medium stores a computer program, and the computer program is used to cause a processor to execute the data scheduling method according to any one of claims 1 to 19.

30. A computer program product, **characterized by** comprising a computer program, when the computer program is executed by a processor, the data scheduling method according to any one of claims 1 to 19 is implemented.
